# EUROPEAN PATENT APPLICATION

(11) **EP 2 416 258 A1**
(43) Date of publication of application: **08.02.2012**
(21) Application number: 09842945.9
(22) Date of filing: 16.12.2009
(51) Int. Cl.: G06F 17/30

(54) **CODE STRING RETRIEVAL DEVICE, RETRIEVAL METHOD, AND PROGRAM**

(30) Priority: 29.03.2009 JP 2009080726
(71) Applicant: S. Grants Co., Ltd., Chiba 261-0004 (JP)
(72) Inventor: SHINJO, Toshio, Chiba-shi Chiba 261-0004 (JP); KOKUBUN, Mitsuhiro, Chiba-shi Chiba 261-0004 (JP)
(74) Representative: Klunker . Schmitt-Nilson . Hirsch
(86) International application number: PCT/JP2009/006922
(87) International publication number: WO 2010/116435

(57) **Abstract**

To provide a code string search method that uses an index data configuration that enables searches for any code strings and can be created in less time than previous art. Search target code string (10a) is partitioned into a plurality of blocks (15) that each have 1 code overlapping, and, for each of those partitioned code string blocks (15), a code ID range table (309) that holds the code ID ranges for each code and a next code ID table (310) that holds the code ID of the code positioned next after each code are created. The code ID range for codes configuring the search code string (40a) is read out from the code ID range table (309), and the next code ID held corresponding to a code ID included in the code ID range of the head code in the read-out search code string (40a) is read out from the next code ID table (310), and the next code ID held in correspondence to that next code is read out successively, while verifying whether the next code ID read out from the next code ID table (310) is included in the code ID range read out from the code ID range table (309).

## Description

### BACKGROUND OF THE INVENTION

### Field of the Invention

This invention is related to code string searches that search with a computer for codes or code strings consisting of bit strings in the same way as character string searches that search for character codes or character code strings consisting of bit strings.

### Description of Related Art

Recently it has become customary to use word processing to create business documents, and by the spread of the internet, the number and size of electronic documents, using character codes consisting of bit strings that can be processed by computers, have grown immensely throughout the world. For this reason, various character string search methods are being developed in order to fetch a necessary document from out of this huge amount of documents using computers.

In these character string search methods it is general practice to prepare an index ahead of time in order to realize fast searches. For example, the method of extracting words from the documents for the index and making an inverted index that associates a document name that includes those words for each of those words is well known. This method has the advantages that the size of this inverted index is relatively small, the search is fast, and configuring the index is easy. However there are languages for which words are difficult to extract. And this method has the disadvantage that when a search is made for a set of multiple words it becomes necessary to process word position matches for the document. And a search for an arbitrary string of characters in a single document is also difficult.

And so an index called a suffix array has been developed that enables a search for any character string. The patent reference 1 and non-patent reference 1 below disclose a suffix array and a search method using that array.

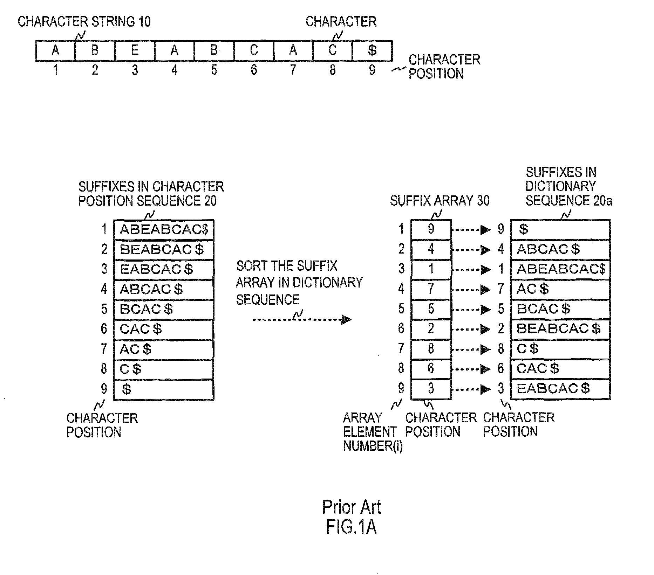

FIG. 1A describes an example of previous search methods related to the above suffix array. FIG. 1A shows an example of a character string 10 that is the target of a search. As shown in the figure, character string 10 consists of the alphabetic characters A, B, C, E, and the separator character $. The character A is located in character positions 1, 4, and 7 of character string 10. The character B is located in character positions 2 and 5 of character string 10. The character C is located in character positions 6 and 8 of character string 10. The character D is located in character position 3 of character string 10. The separator character $ is located in character position 9, which is the tail end of character string 10.

Also FIG. 1A depicts the suffixes in character position sequence 20, the suffixes in dictionary sequence 20a, and the suffix array 30, which correspond to the character string 10.
Character string 10, as shown in FIG. 1A, can be thought to have 9 suffixes as its partial character strings. By sorting suffixes in character position sequence 20, which has suffixes arranged in the character position sequence of the leading character of each suffix, into dictionary sequence, suffixes in dictionary sequence 20a is obtained. At this time, by storing the character position of the leading character of the suffix rearranged in dictionary sequence in an array, suffix array 30 is obtained. By means of this suffix array, the leading character position of a partial character string that matches the pattern of the search character string can be obtained from among the character strings that are the target of the search.

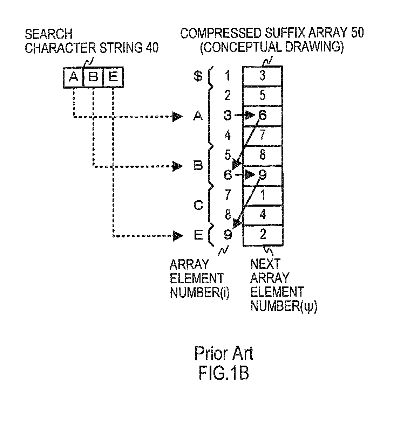

FIG. 1B describes conceptually a character string search using a compressed suffix array in an example of previous search art and shows compressed suffix array 50 (a conceptual diagram) associated with search character string 40 and suffix array 30. In array element number (i) of compressed suffix array 50 (conceptual diagram) is stored the next array element number (Ψ). The next array element number (Ψ) is an array element number of suffix array 30 wherein is stored a character position which has 1 added to the character position stored in array element number (i) of suffix array 30.

By changing the content stored in the array from a character position to a next array element number (Ψ), the values stored in each character group are arranged in ascending order, as shown in the drawing. As a result, because the value stored in each array element need not be the actual next array element number (Ψ) itself but can be an increment on the value of the previous array element number, the bit width of the addresses can be made smaller, and the amount of information can be compressed.

Regarding the concept of a search, FIG. 1B shows the search steps from each of the characters in the illustrated search character string 40 by means of the arrow with a dotted line to array element numbers (i) of compressed suffix array 50 (conceptual diagram) and by means of an arrow between the numbers 3, 6, 9 shown in bold for those array element numbers (i), and the numbers 6, 9 shown in bold in the next array element number (Ψ). In other words, given that from among the array element numbers corresponding to the leading character A in search character string 40, 3, for example, is selected and the next array element number 6 in array element number 3 is the array element number corresponding to the second letter B in the search character string 40, and the next array element number 9 in array element number 6 is the array element number corresponding to the third letter E in the search character string 40, it can be understood that character string 10 that is the target of searches will result in a hit in a search using search character string 40.

Patent document 1: JP 3, 672, 242 B

Non-Patent document 1: Sadakane Kunihiko, "A Note on the Compressed Suffix Arrays"; IEICE technical report, Data engineering; 100 (226), pp.49-56, 2000/07/19; The Institute of Electronics, Information and Communication Engineers.

### SUMMARY OF THE INVENTION

By using a compressed suffix array in a character string search, a search can be done for any character string and the size of the array can be reduced. However, to create a compressed suffix array, first it is necessary that suffixes be created from the character strings that are the target of searches and those suffixes be sorted in dictionary sequence, and a suffix array be created, and so the processing time for creating a compressed suffix array from character strings that are the target of searches becomes quite large.
Whereat, the problem that this invention intends to solve is to reduce the time for creating index data that enables searches for not only character strings but for any code string. And the objective of this invention is to find an index data structure that enables searches for any code string and that can be created in less time than current art, and to provide a code string search method that uses that data structure.

In accordance with this invention, the code string that is the target of searches is divided into several blocks (hereinafter these blocks may be called code string blocks). The code located at the tail end of one code string block is duplicated in the code located at the head of the following code string block in the proposed block partitioning. Then for each code string block a code ID that uniquely identifies each and all of the codes located in the code string block is to be assigned to each and all of those codes in such a way that the range of code IDs does not overlap for any of the values of differing codes (hereinbelow they may simply be called a code if there is no risk of misunderstanding; also conversely to emphasize the fact that they are the values of differing codes they may be called code types). For example, the above code assignment can be realized by repeatedly assigning a code ID in ascending order to each code in the order that they occur in the code string block, the value of the first code ID for each code type having a larger value than that of the code IDs assigned until then.
And, in accordance with this invention, corresponding to each code block, a code ID range table holding the range of code IDs for each code and a next code ID table holding a next code ID indicating the code ID that is located immediately after each code ID are created and a code string search is implemented using those code ID range tables and next code ID tables.

According to this invention's code string search for a search target code string using a search code string, the ranges of the code IDs for the codes comprising the search code string are read out from the code ID range table for the head code string block, and the next code ID held in relation to a code ID included in the code ID range for the leading code in the search code string is read out from the next code ID table created for each code string block, and then the next code IDs held corresponding to that next code are successively read out from the next code ID table and it is verified whether the next code ID read out from the next code ID table is included in the range of code IDs read out from the code ID range table.

In accordance with this invention, because a search can be implemented using a code ID range table and a next code ID table, both with a simple structure, it is not necessary to create a suffix array, and the processing burden for creating a computer index can be reduced.

### BRIEF DESCRIPTION OF THE DRAWINGS

FIG. 1A is a drawing describing an example of previous search methods related to a suffix array.
FIG. 1B is a drawing describing an example of a compressed suffix array in previous search methods.
FIG. 2A is a drawing describing function blocks for creating the data structure for an index in one embodiment of this invention.
FIG. 2B is a drawing describing function blocks for performing a code string search in one embodiment of this invention.
FIG. 2C is a drawing describing an exemplary hardware configuration in one embodiment of this invention.
FIG. 3A is a drawing describing an index data structure in one embodiment of this invention.
FIG. 3B is a drawing describing conceptually a code string search in one embodiment of this invention.
FIG. 4A is a drawing describing the processing flow of the prior stage that creates index data for a code string block in one embodiment of this invention.
FIG. 4B is a drawing describing the processing flow of the latter stage that creates index data for a code string block in one embodiment of this invention.
FIG. 4C is a drawing describing the general flow of processing that creates index data for a code string block in one embodiment of this invention.
FIG. 5A is a drawing describing the processing flow for enumerating the number of occurrences of each code type of the codes included in the code strings that are targets of searches in one embodiment of this invention.
FIG. 5B is a drawing describing the processing flow for setting the code ID range for each code type based on the number of occurrences in one embodiment of this invention.
FIG. 5C is a drawing describing the processing flow for completing a next code ID
table based on the codes included in the search target code string in one embodiment of this invention.
FIG. 6 is a drawing describing in general the overall processing flow for a code string search in one embodiment of this invention.
FIG. 7A is a drawing describing the processing flow of the prior stage of a code string search that makes a given code string block the search start position in one embodiment of this invention.
FIG. 7B is a drawing describing the processing flow of the latter stage of a code string search that makes a given code string block the search start position in one embodiment of this invention.
FIG. 8A is a drawing describing the flow of a full match search in one embodiment of this invention.
FIG. 8B is a drawing describing the flow for a prefix match search in one embodiment of this invention.
FIG. 8C is a drawing describing the flow of a search that includes an any-code in one embodiment of this invention.
FIG. 9A is a drawing describing the processing flow of the prior stage of a search in the next code string block in one embodiment of this invention.
FIG. 9B is a drawing describing the processing flow of the latter stage of a search in the next code string block in one embodiment of this invention.
FIG. 10A is a drawing describing the flow of the search processing from the head code string block in one embodiment of this invention.
FIG. 10B is a drawing describing the flow of the transition to a search in the next code string block in one embodiment of this invention.
FIG. 10C is a drawing describing the flow of the search processing from the second code string block after the head code string block in one embodiment of this invention.

### DESCRIPTION OF THE PREFERRED EMBODIMENTS

Hereinbelow, preferred embodiments of this invention are described while referencing the drawings.

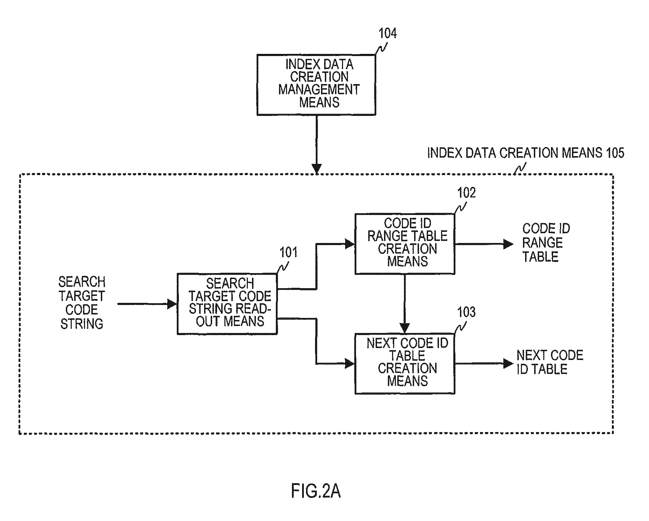

FIG. 2A is a drawing describing function blocks for creating the data structure for an index in one embodiment of this invention. Index data creation management means 104 manages the creation, by index data creation means 105, of index data for each block (code string block) that is partitioned out of the code string that are the target of searches, and creates an index data management table. Index data creation means 105 includes search target code string read-out means 101, code ID range table creation means 102, and next code ID table creation means 103. A search target code string is read out by the search target code string read-out means 101 and is passed to the code ID range table creation means 102 and the next code ID table creation means 103. The code ID range table creation means 102 creates a code ID range table holding the range of code IDs for each code, and the next code ID table creation means 103 creates a next code ID table holding next code IDs, which are the code IDs positioned next after each code ID.

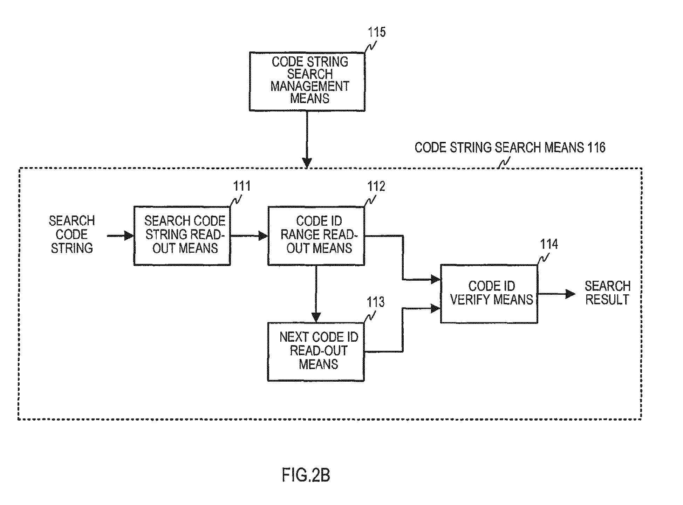

FIG. 2B is a drawing describing function blocks for performing a code string search in one embodiment of this invention. Code string search management means 115 manages the search, by code string search means 116, for each code string block in the search target code string. Code string search means 116 includes search code string read-out means 111, code ID range read-out means 112, next code ID read-out means 113, and code ID verify means 114.

A search code string is read out by search code string read-out means 111 and is passed to the code ID range read-out means 112. The code ID range read-out means 112 reads out the range of the code IDs of the codes that compose the search code string passed from search code string read-out means 111 using the code ID range table created by the code ID range table creation means 102, and passes them to the next code ID read-out means 113 and the code ID verify means 114.

The next code ID read-out means 113 reads out the next code ID stored in association with a code ID included in the code ID range of the leading code in the search code string passed by the code ID range read-out means 112 from the next code ID table created by the next code ID table creation means 103 and at the same time successively reads out from the next code ID table a next code ID stored in correspondence with that next code and passes it to the code ID verify means 114. The code ID verify means 114 verifies whether the next code ID passed from the next code ID read-out means 113 is included in the range of code IDs passed from the individual code ID range read-out means and outputs the search result.

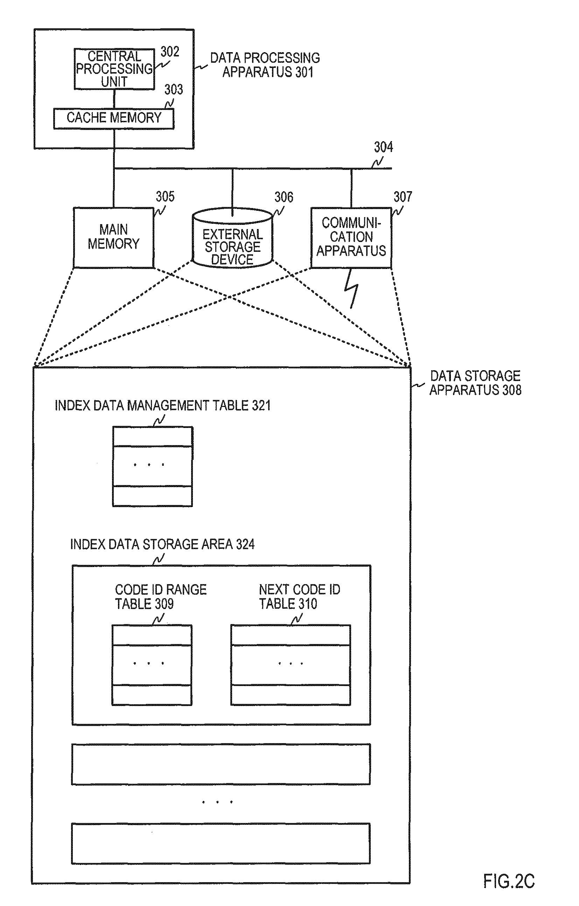

FIG. 2C is a drawing describing an exemplary hardware configuration in one embodiment of this invention.
Search processing and index creation processing are implemented with the searching apparatus of the present invention by a data processing apparatus 301 having at least a central processing unit 302 and a cache memory 303, and a data storage apparatus 308. The data storage apparatus 308, which has the storage area for index data management table 321 and the code ID range table 309 and the next code ID table 310 associated with each code string block, can be implemented in the main memory 305 or a storage device 306, or alternatively, by using a remotely disposed apparatus connected via a communication apparatus 307.

Each of the function blocks such as the search target code string read-out means 116 and so forth described referencing FIG. 2A and FIG. 2B can be realized in the hardware illustrated in FIG. 2C and in software that prepares the steps described hereinafter.

In the example shown in FIG. 2C, although the main memory 305, the storage device 306, and the communication apparatus 307 are connected to the data processing apparatus 301 by a single bus 304, there is no restriction to this connection method. The main memory 305 can also be disposed within the data processing apparatus 301.
Also, although it is not particularly illustrated, a temporary memory area can of course be used to enable various values obtained during processing to be used in subsequent processing. In the descriptions below, the values stored or set in a temporary memory area may be called by the name of that temporary memory area.

Next, an overview is described of a search method in one embodiment of this invention.

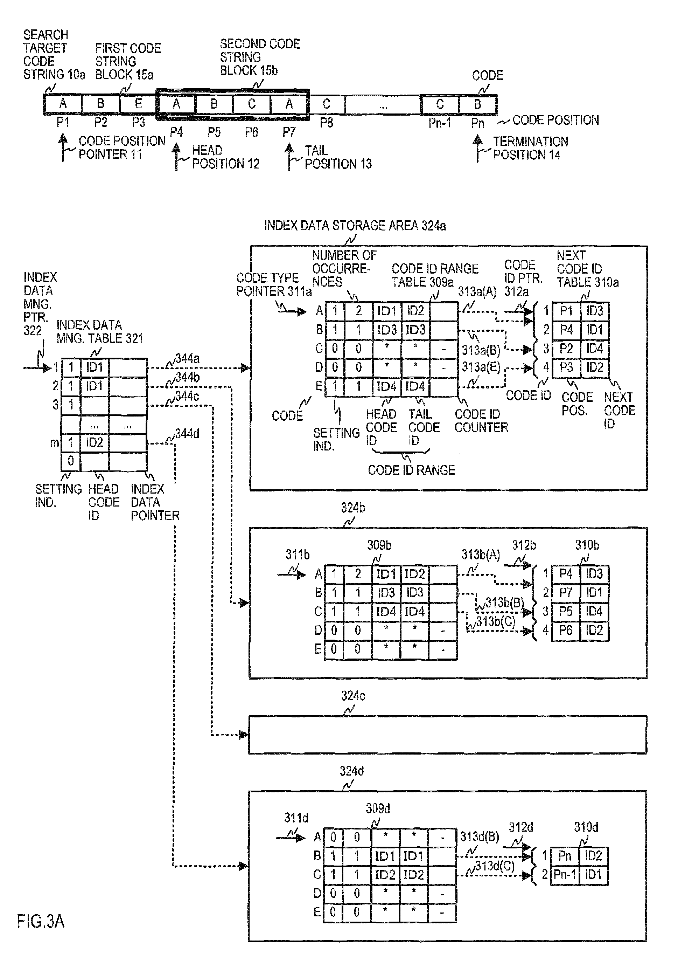

FIG. 3A is a drawing describing an index date structure in one embodiment of this invention. FIG. 3A depicts the search target code string 10a as an example of a code string that forms the target of index data creation. The exemplified search target code string 10a consists of the alphabetic character codes A, B, E, A, B, C, A, ... C, B. The P1 to P8 ... Pn-1, Pn depicted below each of those alphabetic codes indicate the position of the code in search target code string 10a. The code position pointer 11 is a pointer that indicates the position of a code in search target code string 10a and in the example in the drawing it points to code position P1.
In the example shown in the drawing, search target code string 10a is partitioned into strings of 4 codes each, with the tail end code position of each string block being duplicated in the head code position in the following block. Thus, the first code string block 15a consists of the code A located in code position P1, pointed to by the code string pointer 11, the code B located in code position P2, the code E located in code position P3, and the code A located in code position P4. As shown by the arrow 12, the head position in the second code string block 15b has the identical P4 as the tail position in the first code string block 15a, and code A is included in both the first code string block 15a and the second codes string block 15b. As shown in the drawing with the box with thick lines, the second code string block 15b consists of the code A located in code position P4, the head position pointed to by the code string pointer 12, the code B located in code position P5, the code C located in code position P6, and the code A located in code position P7, the tail position pointed to by arrow 13. Code position Pn shown by arrow 14 is defined as the terminal position. Only the last code string block is configured by 2 codes.
A code ID range table and a next code ID table are created as the index data for any code string block that is the target of a search.

Furthermore FIG. 3A depicts an exemplary index data structure for a code string search corresponding to the search target code string 10a. It exemplifies the search target code string 10a, and the index data management table 321 that is created corresponding to the code strings blocks for that string, and an index data storage area 324a corresponding to the head code string block 15a and holding a code ID range table 309a and a next code ID table 310a, an index data storage area 324b corresponding to the second code string block 15b and holding a code ID range table 309b and a next code ID table 310b, an index data storage area 324c corresponding to the third code string block and holding a code ID range table 309c and a next code ID table 310c, and an index data storage area 324d corresponding to the final code string block and holding a code ID range table 309d and a next code ID table 310d. Depiction of the index data stored in index data storage area 324c is omitted. Also, hereinbelow, items in common may be expressed as "code ID range table 309" and "next code ID table 310". And the same applies to expressing other reference numerals.
The entries of the code ID range table 309 are created for each code type of the differing codes that occur in the search target code string, which is the target for making index data. As is shown on the left side of the code ID range table 309, in the example shown in the drawing, of all the letters in the alphabet, the search target code string with the code strings consisting of codes A to E is the target for making the index data, and an entry is made corresponding to each code. The code type pointer 311 is a pointer to the entries in code ID range table 309. In the example in the drawing of the code ID range table 309a corresponding to the head code string block, code type pointer 311a points to the entry corresponding to code A. In the same way, in the example of the code ID range table 309b corresponding to the second code string block, code type pointer 311b points to the entry corresponding to code A. Also, in the example of the code ID range table 309d corresponding to the last code string block, code type pointer 311d points to the entry corresponding to code A.
Also, because each code is composed of bit strings, each code holds a value that can be expressed by the bit values of that bit string. Thus, it is clear that a position of an entry corresponding to each code in code ID range table 309 can be associated with the value of each such code. In other words, the value taken by the code type pointer 311 can be made the code itself. Consequently, in the description below, an entry corresponding to a given code may be expressed as an entry being pointed to by that code.

As shown in the information beneath the code ID range table 309a, an entry in the code ID range table 309a consists of a setting indicator, a number of occurrences, a head code ID, a tail code ID, and code ID counter.
The setting indicator shows with a 0 or 1 whether that code occurs in the search target code string. In the example of code ID range table 309a, because the codes C and D do not occur in the head code string block, the entries for codes C and D have a 0, and all the other entries have a 1. In the example of code ID range table 309b, because the codes D and E do not occur in the second code string block, the entries for codes D and E have a 0, and all the other entries have a 1. In the example of code ID range table 309d, because the codes B and C do not occur in the last code string block, the entries for codes B and C have a 0, and all the other entries have a 1.
The number of occurrences is the number of times that code occurs in the search target code string. In the example of code ID range table 309a, 2, 1, 0, 0, and 1 are stored for the codes A to E. In the example of code ID range table 309b, 2, 1, 1, 0, 0, and 0 are stored for the codes A to E. In the example of code ID range table 309d, 0, 1, 1, 0, and 0 are stored for the codes A to E.

The head code ID and the tail code ID indicate the range for that code ID for each code. The code ID is assigned in the order of appearance of each unique code in the search target code string in order that there is no overlap between codes.
In the example of code ID range table 309a, because the number of occurrences for code A is 2, it has the range of ID 1 to ID 2, and because the number of occurrences for the next code B is 1, the head code and the tail code are both ID 3. Because the number of occurrences for code C and code D is 0, the head code IDs and the tail code IDs are not set. Because the number of occurrences for code E is 1, the head code and the tail code are both ID 4.
In the same way below, in the example of code ID range table 309b, the head code of code A is ID 1 and its tail code is ID 2, the head code and tail code of code B are both ID 3, the head code and tail code of code C are both ID 4.
Also, in the example of code ID range table 309d, the head code and tail code of code B are both ID 1, and the head code and tail code of code C are both ID 2.

Also, although it preferable that the value of ID 1 and so forth be an integer value beginning concretely from 1, it is not limited to that technique and it is sufficient that the ID ranges for each code be differentiated. Also, although the code ID range is expressed by a head code ID and a tail code ID in the example in the drawing, it can be expressed by enumerating all the code IDs if one does not mind that the expression needs a variable data length.

A code ID counter is a counter needed when a next code ID table is to be created at the same time that a code ID range table is being created, and it is not necessary as index data. Thus it can be set up as a counter separate from that of the code ID range table, for each of the differing code types.

An entry in the next code ID table 310 is created for each code ID assigned to a code in a code string block. As shown on the left side of next code ID table 310, in the example shown in the drawing, except for the next code ID table 310d for the last code string block, entries are created corresponding to code ID 1 to code ID 4. Each entry consists of the item's code position and next code ID. Code ID pointer 312 is a pointer pointing to an entry in next code ID table 310, and in the example in the drawing it points to ID 1 in each of the next code ID tables 310.

The code position in the entry for each code ID is a code position that is the position of the code with that code ID in search target code string 10a, and in the example shown in the drawing P1 is stored for ID 1, P4 is stored for ID 2, P2 is stored for ID 3, and P3 is stored for ID 4.
As shown by the dotted line of arrow 313a (A) in the drawing, the first and second entries in next code ID table 310a correspond to the code A. In the same way, as shown by the dotted line of arrow 313a (B) in the drawing, the third entry corresponds to the code B; and, as shown by the dotted line of arrow 313a (E) in the drawing, the fourth entry corresponds to the code E.
The next code ID for each code ID entry is the code ID for the code located next in the code string block after the code for that code ID entry. Also, the code ID for the code that is at the head of a code string block is stored as the next code ID of the tail end of the string. Thus in next code ID table 310a, for ID 1 the stored next code ID is ID 3, for ID 2 it is ID 1, for ID 3 it is ID 4, for ID 4 it is ID 2.

In next code ID table 310b, P4 is stored for ID 1, P7 is stored for ID 2, P5 is stored for ID 3, and P3 is stored for ID 4.
As shown by the dotted-line arrow 313b (A), the first and second entries in the next code ID table 310b correspond to the code A. In the same way, as shown by the dotted-line arrow 313b (B), the third entry corresponds to the code B; and as shown by the dotted-line arrow 313b (C), the fourth entry corresponds to the code C.
Also, the stored next code ID for ID 1 is ID 3, for ID 2 it is ID 1, for ID 3 it is ID 4, and for ID 4 it is ID 2.

In next code ID table 310d, Pn is stored for ID 1, and Pn-1 is stored for ID 4. As shown by the arrow with the dotted line 313d (B), the first entry in the next code ID table 310b corresponds to the code B. In the same way, as shown by the dotted-line arrow 313d (C), the second entry corresponds to the code C. Also, the stored next code ID for ID 1 is ID 2, and for ID 2 it is ID 1.

Next code ID table 310 keeps, as index data, the fact that 2 codes, expressed in code IDs, have a contiguous position relationship in the search target code string. The duplication relationship between the code in the tail position in a preceding code string block and the code in the head position in a following code string block is managed by the fact that the index data management table holds the head code IDs of each code string block.

As shown in the drawing, index data management table 321 has an entry for each code string block, and consists of the items: a setting indicator, a head code ID, and an index data pointer. Index data management pointer 322 is a pointer pointing to an entry in the index data management table. In the example in the drawing, index data management pointer 322 points to entry 1, which corresponds to the head code string block 15a.
A 1 is set in the setting indicator of index data management table 321 for the entries from entry 1 to entry m, and 0 is set in all the other entries. Entry m corresponds to the last code string block. Also, ID 1 is set in entry 1 of the index data management table as its head code, ID 1 is set in entry 2 as its head code, and ID 2 is set in entry m as its head code.
As shown by the dotted-line arrows 344a, 344b, 344c, and 344d, the index data pointers point to the index data storage areas 324a, 324b, 324c, and 324d that correspond to those code string blocks.

When next code ID table 310 is compared with compressed suffix array 50 in the example of previous art shown in FIG. 1B, whereas, in compressed suffix array 50, the next array element number for each character is sorted, in next code ID table 310, the code position is sorted for the code type of each differing code. Thus if a successive search is made for the same code, the cache effect can be expected to provide faster processing.

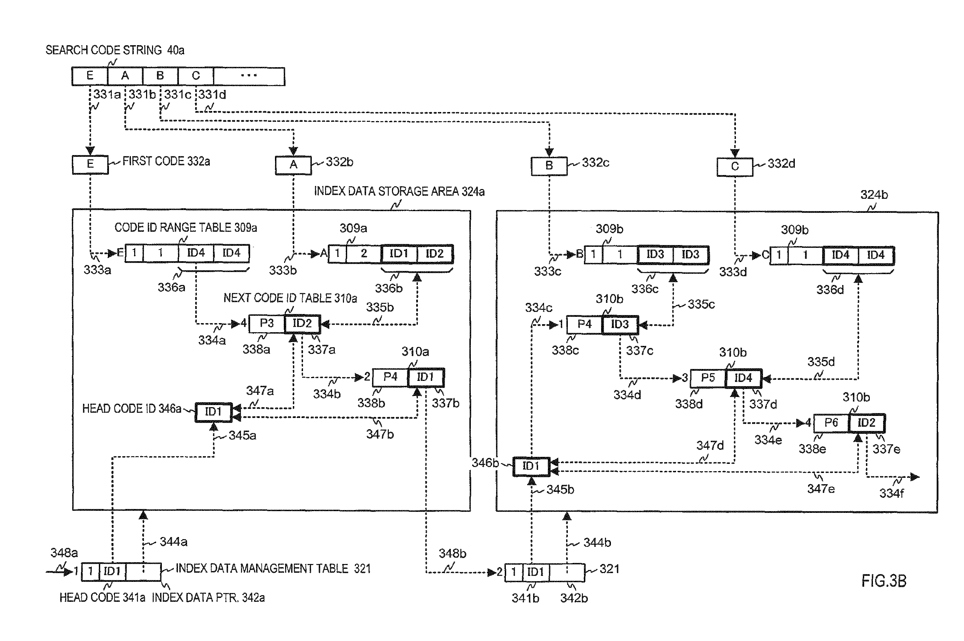

FIG. 3B is a drawing describing conceptually a code string search in one embodiment of this invention.
The search target code string is taken to be search target code string 10a shown in FIG. 3A, and it is taken to be partitioned into the code string blocks shown in FIG. 3A. Also a search code string is described conceptually by the search code string 40a shown in FIG. 3B. Code ID range tables 309 and next code ID tables 310 are taken to be created corresponding to the code string blocks of the search target code string, and index data management table 321 is also taken to be created.
Before starting a search, the head entry 321 (1) of the index data management table shown by arrow 348a is read out, and, as shown by the arrow with a dotted line 344a, code ID range table 309a and next code ID table 310a stored in index data storage area 324a are obtained by index data pointer 342a. Furthermore, as shown by the dotted-line arrow 345a, ID 1, which is stored in the head code 341a is read out, and, as shown by the arrow with a dotted line 345a, is set in the head code ID 346a in a temporary storage area.

As shown in the drawing, code E, code A, code B, and code C are located in search code string 40a, starting from its head. Then as shown in the drawing by dotted-line arrow 331a, code E, which is the first code, code 332a, is read out. Next, as shown by dotted-line arrow 333a, entry 309a (E) corresponding to code E in code ID range table 309a corresponding to the head code string block is read out. (If the head code of search code string 40a does not exist in the head code string block, processing skips to index data associated with a code string block wherein the head code exists.)
Then, as shown by dotted-line arrow 334a, the code ID included in ID range 336a, in the example in the drawing, ID 4, is read out from entry 309a (E), and entry 310a (4) corresponding to the read out code ID 4 is read out from next code ID table 310.

Code ID1, which is stored in the entry (1) in the index data management table 321, is set in head code ID 346a in a temporary storage area.
Then as shown by the bidirectional dotted-line arrow 347a, ID 2, which is the next code ID in entry 310a (4) corresponding to code ID 4, and ID 1, which is set in head code ID 346a, are compared and a determination is made that the next code ID is other than the head code ID.

Next, as shown by dotted-line arrow 331b, code A, which is the second code, code 332b, is read out. Because the determination by the bi-directional dotted arrow 347a noted above was that the code is other than the head code ID, as shown by dotted-line arrow 333b, entry 309a (A) corresponding to code A in code ID range table 309a that is the same as that for the first code E is read out. Then as shown by the bidirectional dotted-line arrow 335b, a determination is made whether ID 2, which is next code ID 337a of entry 310a (4) that corresponds to code ID 4 read-out from next code ID table 310a, is included in the code ID range 336b (ID 1 to ID 2) of entry 309a (A), which corresponds to the read-out code A in code ID range table 309a. In the example shown in the drawing, the result of the determination is "yes". This means that the code sequence E to A exists in the head code string block in search target code string 10a. Also, because the code position 338a of entry 310a (4), which corresponds to code ID 4 read out from next code ID table 310a, is P3, it can be understood that the leading position of the code sequence E to A is P3.

Furthermore, as shown by dotted-line arrow 334b, ID 1, which is the next code ID 337b in entry 310a (2) corresponding to ID 2 in next code ID 337a, is read out. Then as shown by the bidirectional dotted-line arrow 347b, a comparison is made between the read-out ID 1 and the ID 1 set previously in the head code ID 346a, and a determination is made whether the next code ID coincides with the head code ID.
In other words, a determination is made that the code A of the head code string block, whose code ID is the code ID2 and which is being compared with the code A, which is the second code 332b in the search code string, is located in the tail position of the head code string block.
Then, as shown by arrow 348b, entry 321 (2), which is the second entry in the index data management table, is read out, and, as shown by the dotted-line arrow 344b, the index storage area 324b is accessed by means of the index pointer 342b, and the code ID range table 309b and the next code ID table are obtained.
Also, the ID 1 stored in head code ID 341b of entry 321 (2), which is the second entry in the index data management table, is set in the head code ID 346b, which is in temporary storage area, as shown by the dotted-line arrow 345b. Then, as shown by the dotted-line arrow 334c, the entry 310b (1) corresponding to the ID 1 set in the head code ID 346b is read out from the entry 310b(1) in the next code ID table 310b.

Furthermore, as shown by dotted-line arrow 331c, code B is read out as the third code 332c, and, as shown by dotted-line arrow 333c, the table entry 309b (B) corresponding to code B in the code ID range table 309b is read out. Then as shown by the bi-directional dotted-line arrow 335c, a determination is made whether ID 3, which is next code ID 337c of entry 310b (1) that corresponds to code ID 1 in next code ID table 310b, is included in the code ID range 336c (ID 3 to ID 3) of entry 309b (B), which corresponds to the read-out code B in code ID range table 309b. In the example in the drawing, the determination becomes "yes". Thus it can be understood that the search target code string 10a produces a hit for the search code string EAB.

Following this determination, as shown by the dotted-line arrow 334d, ID 4, which is the next code ID 337d in entry 310b (3) corresponding to ID 3, which is the head code ID 337c, is read out. Then as shown by the bi-directional dotted-line arrow 347d, a comparison is done between the read-out ID 1 and the ID 1 set previously in the head code ID 346b, and a determination is made that the next code ID does not coincide with the head code ID.
At that point, as shown next by dotted arrow 331d, code C, which is the fourth code 332d, is read out. Also, as shown by the dotted-line arrow 333d, the table entry 309b (C) corresponding to code C in the code ID range table 309b is read out, just as is done for the third code B. Then as shown by the bidirectional dotted-line arrow 335d, a determination is made whether ID 4, which is next code ID 337d of entry 310b (3) that corresponds to code ID 3 in next code ID table 310b, is included in the code ID range 336d (ID 4 to ID 4) of entry 309b (C), which corresponds with the read-out code C shown by dotted-line arrow 333d. In the example shown in the drawing, because the determination is "yes", it can be understood that search target code string 10a produces a hit on the search code string EABC.
Following that determination, as shown by the dotted-line arrow 334e, ID 2, which is the next code ID 337e in entry 310b (4) corresponding to ID 4, which is the next code ID 337d, is read out. Then as shown by the bi-directional dotted-line arrow 347e, a comparison is done between the read-out ID 2 and the ID 1 set previously in the head code ID 346b, and a determination is made that the next code ID does not coincide with the head code ID.
Then because the code position 338b of the entry 310a (2) corresponding to the code ID 2 read out from next code ID table 310a is P4, and the code position 338d of the entry 310b (3) corresponding to the code ID 3 read out from next code ID table 310b is P5, and the code position 338e of the entry 310b (4) corresponding to the code ID 4 is P6, it can be understood that the above noted hit positions are code positions P3, P4, P5, and P6.

Even for the fifth code, not shown in the search code string 40a, as shown by the dotted-line arrow 334f, the process of reading out the next code ID of the entry in the code ID range table corresponding to ID 2, which is the next code ID 337e, and determining whether it is within the ID code range of the entry in the code ID range table 309 pointed to by the code type of the fifth code is repeated.
By doing the above, a code string search according to one embodiment of this invention is implemented.

Next the process for creating index data in one embodiment of this invention is described. As shown in FIG. 3A, the index data is composed of the index data management table, and the code ID range tables and the next code ID tables stored in the index data storage areas corresponding to each code string block.

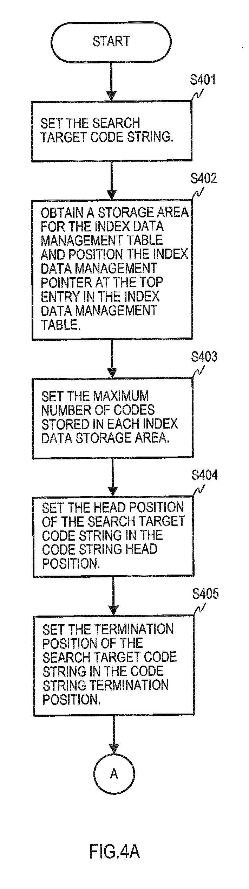

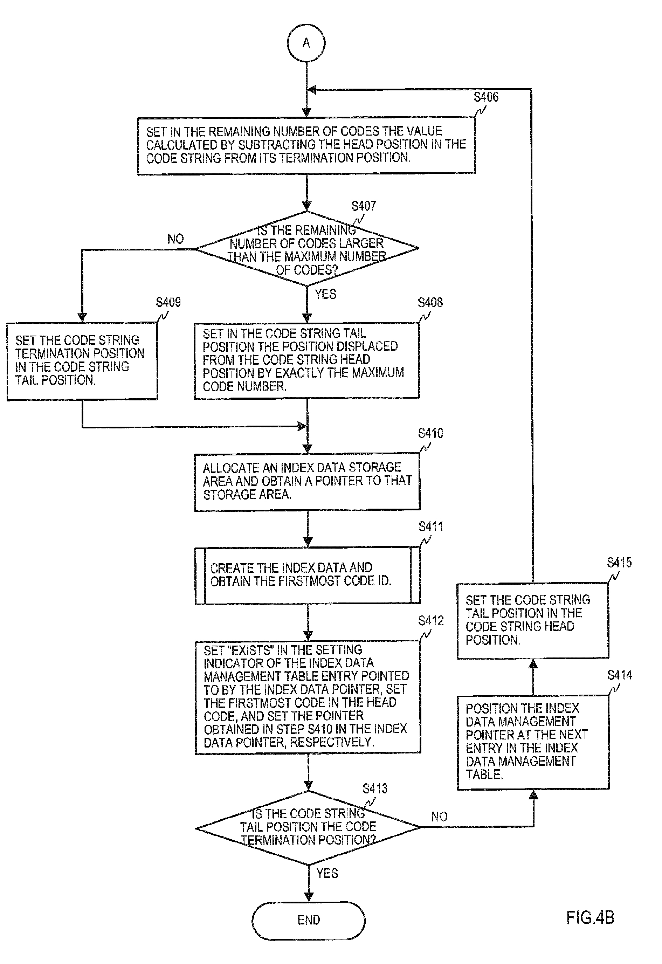

FIG. 4A and FIG. 4B are drawings describing the general flow of processing that creates index data in one embodiment of this invention. The index data creation processing flow shown in FIG. 4A and FIG. 4A is configured from the sequential flow of the initialization processing and the creation processing of the block index data corresponding to each code string block (hereinafter this data may be called the block index data corresponding to each code string block, or, more simply, block index data).

FIG. 4A is a drawing describing the processing for creating index data in one embodiment of this invention, in other words, the processing flow of the prior stage processing that creates successively block index data corresponding to each code string block. The processing of this prior stage is the above noted initialization processing.
As shown in FIG. 4A, in step S401, the search target code string is set. Setting the search target code string means that one code string is read out by search target code string read-out means 101 illustrated in FIG. 2A, from the code strings that are targets of searches stored in a data storage apparatus, and setting it in an unillustrated search target code string setting area. Also, the above search target code string setting area is one of "temporary memory areas used to enable various values obtained during processing to be used in subsequent processing" described above. In the description hereinbelow, instead of an expression like "setting in an unillustrated search target code string setting area", expressions such as "set as the search target code string" or more simply "set the search target code string" may be used. The same also applies to temporary data other than a search target code string.

Next in step S402, a storage area for the index data management table is obtained, and an index data management pointer is positioned at the top entry in the index data management table. Proceeding to step S403, the maximum number of codes in a code string block partioned out of the search target code string is set. In the example shown in FIG. 3A, the maximum number of codes is 4. Next, at step S404, the head position of the code positions in the search target is set in the code string head position. And at step S405 the termination position of the code positions in the search target is set in the code string termination position, and processing moves to step S406 shown in FIG. 4B.
With the above, the initialization processing of the index data creation processing is finished. As shown in FIG. 3A, the search target code string 10a has been set, the index data management pointer 322 has been positioned at the head entry in the index data management table 321, 4 is set in the maximum number of codes, P1 is set in the code string head position, and Pn is set in the code string termination position.

FIG. 4B is a drawing describing the processing flow of the latter stage that creates successively block index data corresponding to each code string block.
As shown in the drawing, in step S406, the value computed by subtracting the head position of the code string from the tail position of the code string is set in the remaining number of codes, and at step S407, a determination is made whether the remaining number of codes is larger than the maximum number of codes. If the remaining number of codes is larger than the maximum number of codes, processing proceeds to step S408 wherein the position that is moved from the head position of the code string by only the amount set in the maximum number of codes is set in the code string tail position. And if the remaining number of codes is not larger than the maximum number of codes, processing proceeds to step S409 wherein the code string termination position is set in the code string tail position.
The processing of the above steps S406 to S409 is performed for purpose of determining, using the code string tail position set in steps S408 or S409, whether the processing, described below, to create index data corresponding to each code string block is to be terminated.

Next, in step S410, a storage area is allocated for the index data of the code string block that is the current target of creating index data and a pointer to that storage area is obtained, and processing proceeds to step S411. The code string block that is the target of index data creation is the block that starts from the code positioned in the code string head position set in step S404 or in step S415 described below.

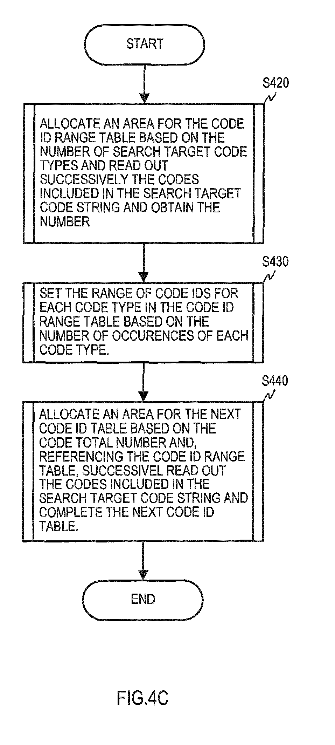

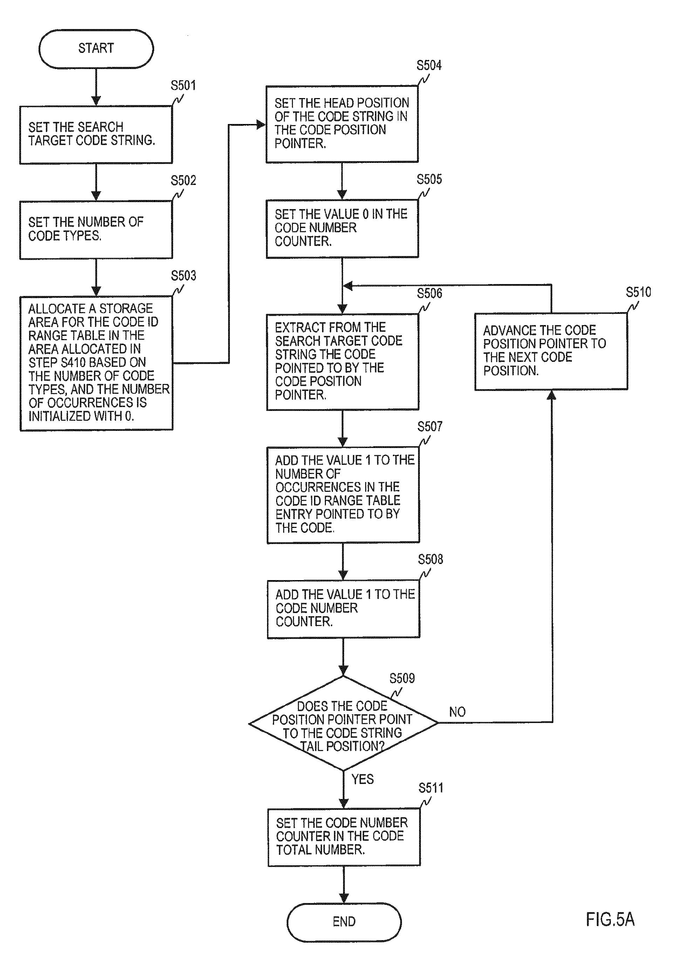

At step S411, index data is created for the code string block that is the current target of index data creation and is stored in the storage area allocated in step S410, and the firstmost code ID is obtained. Details of the processing in step S411 and the firstmost code ID are explained below referencing FIG 4C and FIG 5A to FIG 5C.

Next, at step S412, "Exists" is set in the setting indicator of the index data management table pointed to by the index data pointer, the firstmost code ID is set in the head code ID, and the pointer obtained in step S410 is set in the index data pointer. The firstmost code ID is the code set in the processing of step S411.

Next, at step S413, a determination is made whether the code string tail code position coincides with the code string terminal position. If the code string tail position coincides with the code string termination position, because the creation of index data has finished, processing is terminated. If the code string tail position does not coincide with the code string termination position, processing proceeds to step S414, and the index data management pointer is positioned at the next entry in the index data management table, and, at step S415, the code string tail position is set in the code string head position, and processing returns to step S406.
The processing loop of the above steps S406 to S415 is repeated until a determination is made in step S413 that the code string tail position points to the code string termination position, and when that determination is made, index data creation processing is terminated because index data creation for all the code strings is completed.

Next, a description of the block index data creation processing in one embodiment of this invention is provided as a description of the details of step S411 shown in FIG. 4B. The block index data creation processing is the same for any code string block, and, due to the fact that a code string block is also a code string, in the description below, the code string block that is the current target of index data creation may be called a search target code string or the code string that is a search target.

FIG. 4C is a drawing describing the general flow of processing that creates block index data in one embodiment of this invention.
First, in step S420, an area for the code ID range table is allocated based on the number of search target code types and at the same time the codes included in the search target code strings are successively read out and the number of occurrences of each read-out code type and the total number of codes is obtained. The total number of codes for the case of the head code string block shown in FIG. 3A is 4, which is identical to the maximum number of codes set in step S403 shown in FIG. 4A.
Details on the processing of step S420 are described later referencing FIG. 5A.

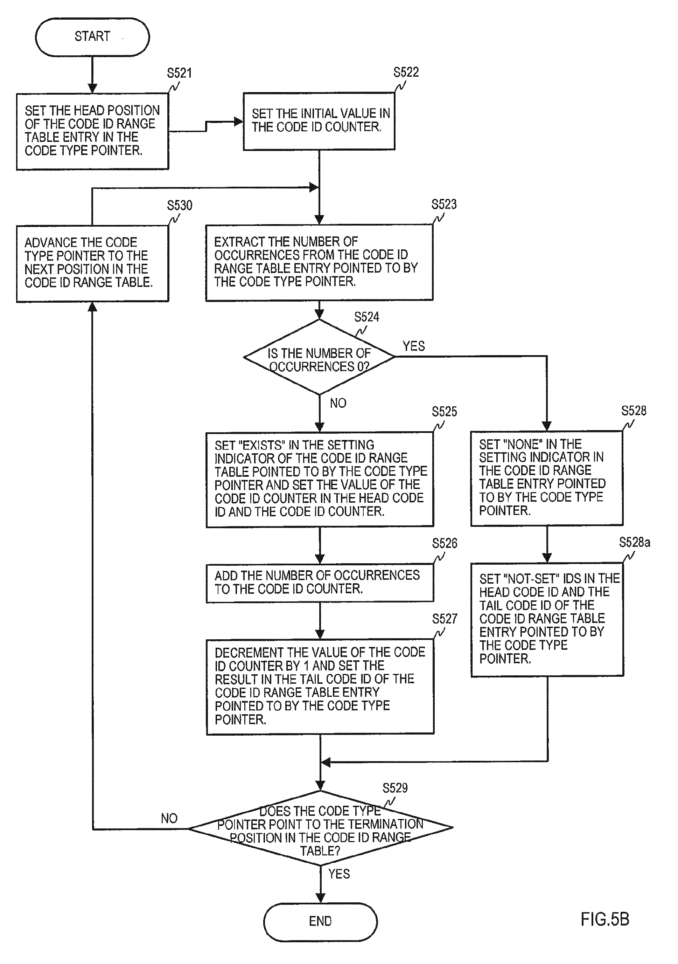

Next at step S430, the range of the code IDs for each code type is set in the code ID range table based on the number of occurrences of each code type. Details on the processing of step S430 are described later referencing FIG. 5B.

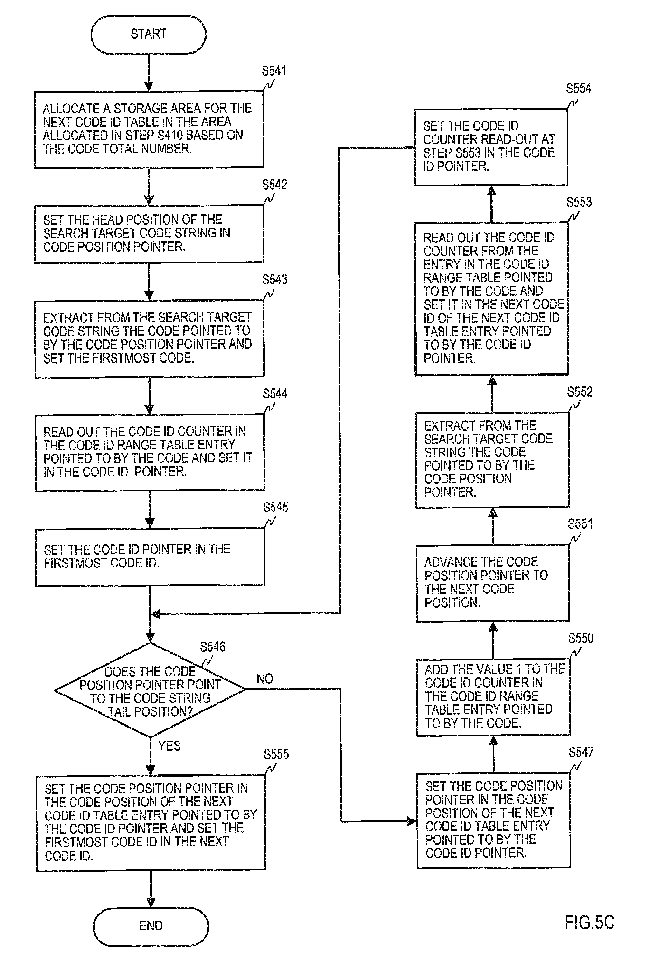

Next at step S440, an area for the next code ID table is allocated based on the total number of codes, and the codes included in the search target code strings are successively read out referencing the code ID range table, then the next code ID table is completed, and processing is terminated. Details on the processing of step S403 are described later referencing FIG. 5C.

FIG. 5A shows the detailed flow of the processing in step S420 shown in FIG. 4C, and it is a drawing describing the processing flow for enumerating the number of occurrences of each code type of the codes included in code strings that are targets of searches.

As shown in the drawing, in step S501, a search target code string is set. Setting the search target code string means that a code string block that is the current target of index data creation is set in an unillustrated search target code string setting area. Also, the above search target code string setting area is one of "temporary memory areas used to enable various values obtained during processing to be used in subsequent processing" described above. In the description hereinbelow, instead of an expression like "setting in an unillustrated search target code string setting area", expressions such as "set as the search target code string" or more simply "set the search target code string" may be used. The same also applies to temporary data other than a search target code string.

Next, in step S502, the number of code types is set. The number of code types is determined by the code system, and it is assumed to be provided beforehand.
Next, proceeding to step S503, a storage area for the code ID range table is allocated in the area allocated in step S410 shown in FIG. 4B based on the number of code types set in step S502, and the number of occurrences is initialized with 0. Continuing, at step S504, the leading position of the code string set at step S501 is set in the code position pointer, and at step S505 the value 0 is set in the code number counter. The above processing of step S501 to step S505 is initialization processing.

Following the initialization processing, proceeding to step S506, the code pointed to by the code position pointer is extracted from the code string. Next, at step S507, the value 1 is added to the number of occurrences for the entry in the code ID range table corresponding to the code type of the extracted code (hereinafter, this may be called the code ID range table pointed to by the code. The same also applies to tables other than the code ID range table.), and at step S508, 1 is added to the code number counter, and processing proceeds to step S509.

At step S509, a determination is made whether the code position pointer is at the tail position of the code string set in steps S408 or S409 of FIG. 4B, and if it is not the tail position, at step S510, the code position pointer is advanced to the next position and processing returns to step S506. If the code position pointer is at the tail position of the code string, at step S511 the code number counter is set in the code total number, and processing is terminated. By means of the above processing, the number of occurrences in the code ID range table is set as well as the code total number.

FIG. 5B shows the detailed flow of the processing of step S430 in FIG. 4C, and it is a drawing describing the processing flow for setting the code ID range for each code type based on the number of occurrences set by the processing shown in FIG. 5A.

First, in step S521, the top position in the code ID range table is set in the code type pointer, and next, in step S522, an initialization value is set in the code ID counter. Next, proceeding to step S523, the number of occurrences is extracted from the code ID range table entry pointed to by the code type pointer, and at step S524, a determination is made whether the extracted number of occurrences is 0.

If the number of occurrences is not 0, at step S525, "Exist" is set in the setting indicator in the code ID range table pointed to by the code type pointer as well as setting the value of the code ID counter in the head code ID and in the individual code ID counter. Next at step S526, the number of occurrences is added to the code ID counter, and at step S527, the value of code ID counter decremented by 1 is set in the tail code ID of the code ID range table entry pointed to by the code type pointer, and processing proceeds to step S529.

Otherwise, if the determination in step S524 is that the number of occurrences is 0, at step S528, "None" is set in the setting indicator in the code ID range table entry pointed to by the code type pointer, and at step S528a, "not-set" IDs are set in the head code ID and the tail code ID of the code ID range table entry pointed to by the code type pointer, and processing proceeds to step S529. The values 0 or -1 can be used as the "not-set" ID.

At step S529, a determination is made whether the code type pointer is at the termination position of the code ID range table, and if it is not the termination position, at step S530, the code type pointer is advanced to the next code type position in the code ID range table and processing returns to step S523. If it is the termination position, processing is terminated because the setting of the code ID range table is completed.

FIG. 5C is a drawing showing the detailed flow of the processing of step S440 shown in FIG. 4C and describes the processing flow for completing a next code ID table based on the codes included in the search target code string.

First, at step S541, a storage area for the next code ID table is allocated in the area allocated in step S410 shown in FIG. 4B based on the total number of codes obtained by the processing shown in FIG. 5B, and at step S542, the leading position of the search target code string is set in the code position pointer. Next, at step S543, the code pointed to by the code position pointer is extracted from the search target code string. Then, at step S544, the individual code ID counter in the code ID range table entry pointed by the code is read out and set in the code ID pointer. Next, at step S545, the code ID pointer is set in the firstmost code ID, and processing proceeds to step S546.

At step S546, a determination is made whether the code position pointer is at the tail position of the search target code string set at steps S408 or S409 of FIG. 4B, and if it is not at the tail position, the processing of steps S547 to S554 is executed, and the code position and next code ID of the next code ID table entry pointed to by that code ID are set, and processing returns to step S546.

First, at step S547, the code position pointer is set in the code position of the next code ID table entry pointed to by the code ID pointer.
Next, at step S550, 1 is added to the individual code ID counter in the next code ID table entry pointed to by the code extracted at step S543 or at step S552 described below, and at step S551, the code position pointer is advanced to the next code position.

Next, in step S552, the code pointed to by the code position pointer is extracted from the search target code string, and at step S553, the individual code ID counter in the next code ID table entry pointed to by the extracted code is read out and set in the next code ID of the next code ID table entry pointed to by the code ID counter.

Next, in step S554, the individual code ID counter read out at step S553 is set in the code ID counter, and processing returns to step S546. The processing of the above steps S546 to S554 is repeated until the code position pointer points to the tail position in the search target code string, and when the code position pointer points to the tail position in the search target code string or to the termination position, processing branches to step S555. At step S555, the code position pointer is set in the code position in the next code ID table entry pointed to by the code ID counter, and the firstmost code ID set at step S545 is set in the next code ID, and processing is terminated.
Also, just as was described above, because of the fact that the next code ID table is created in sequence from the beginning of the search target code string and the fact that the range of code IDs is divided into code types, it is clear that the next code IDs and their code positions stored in the next code ID table and associated with a certain code ID are stored contiguously in the code ID sequence of the codes with the same type and in code position sequence.
By means of the above processing described in detail referencing FIG. 4A to FIG. 5C, index data is created for code string search in one embodiment of this invention.

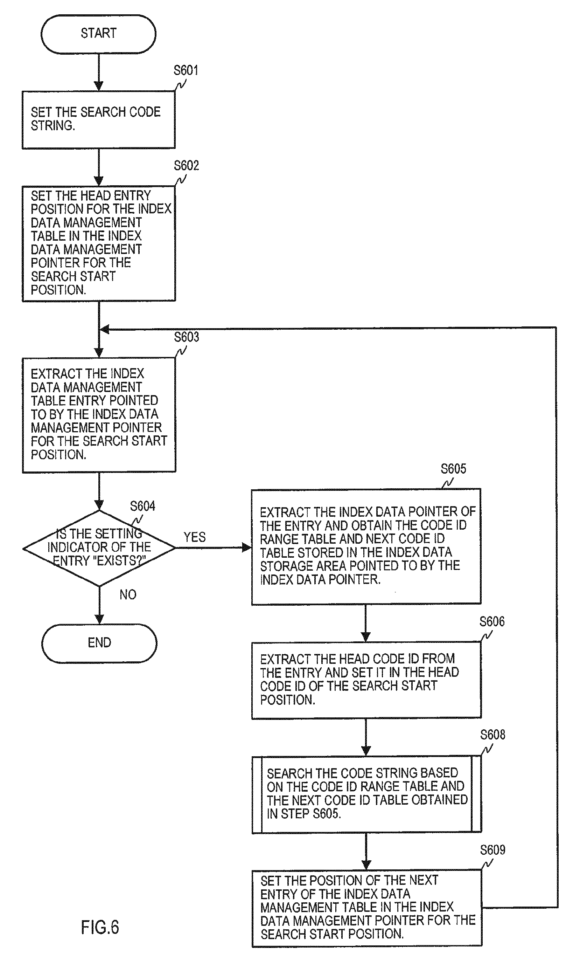

Next, referencing FIG. 6 to FIG. 9B, the processing of a code string search in one embodiment of this invention is described. Just as the concept of a code string search in one embodiment of this invention was described above referencing FIG. 3B, in the code string search in one embodiment of this invention, first, the code in the search target code string that matches the head code of the search code string and the code position that is its position are obtained, and, next, a comparison is made between each single code of the codes in the search target code string from the obtained code position and each single code in the search code string, using the code ID range table and next code ID table created in correspondence to that code string block.

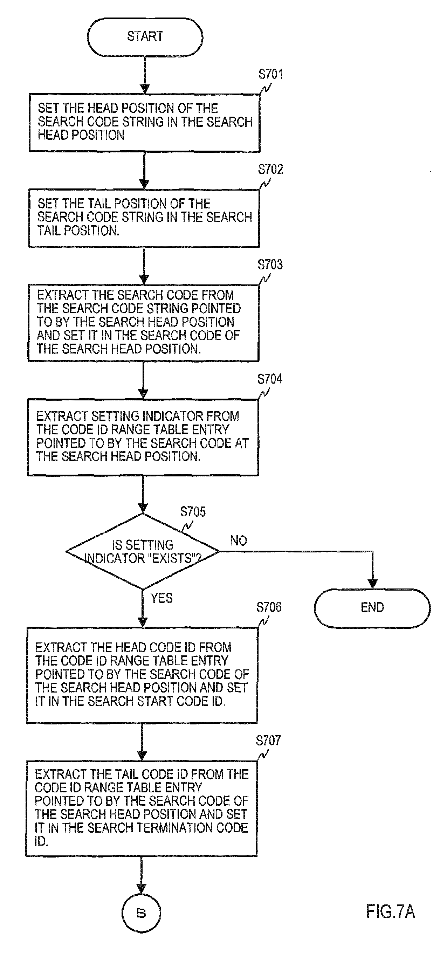

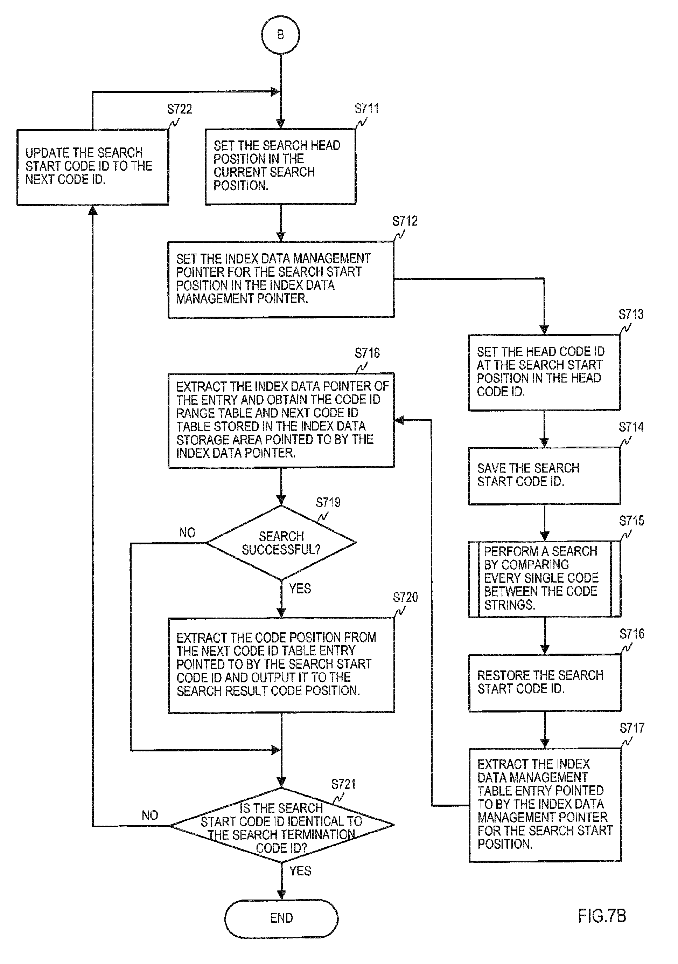

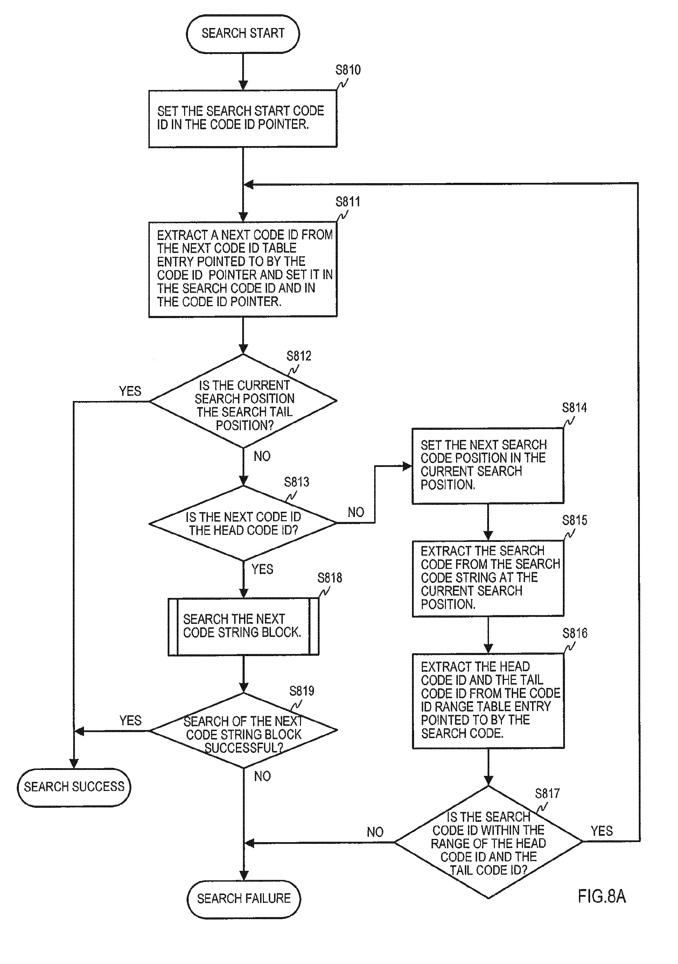

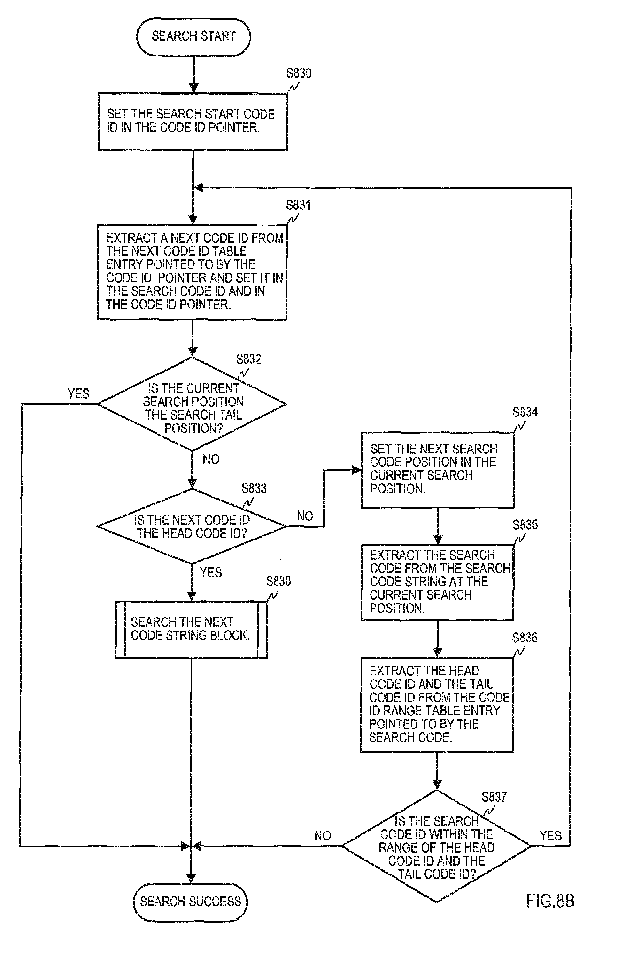

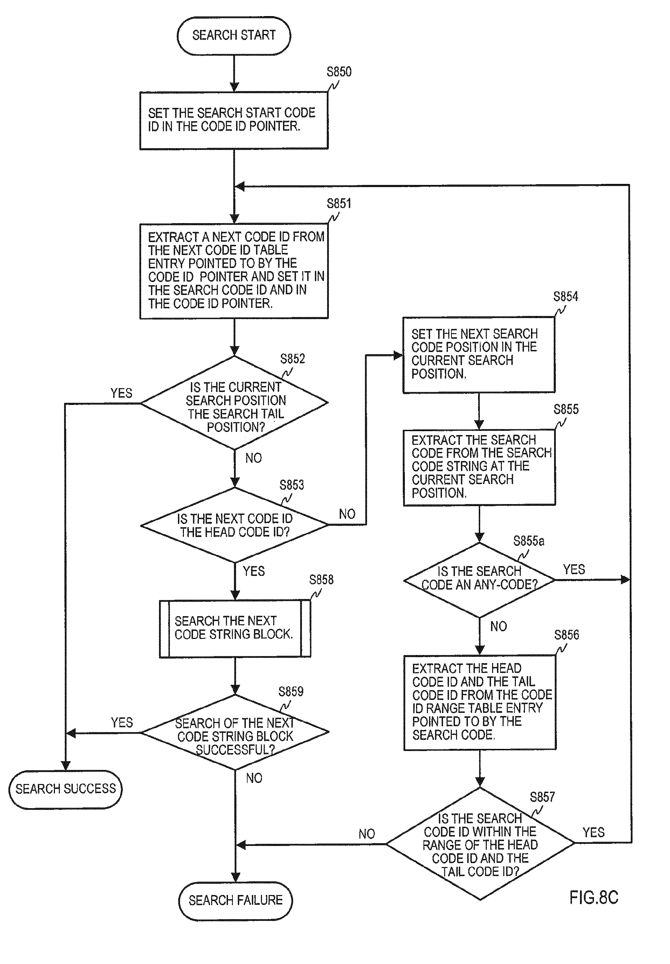

Next, before entering a concrete description referencing FIG. 6 to FIG. 9B, an overview of the processing flow in the code string search processing in one embodiment of this invention and the relationship between the processing depicted in each of the drawings is described.
The processing flow in the code string search processing in one embodiment of this invention has 3 nested loops.
The outermost loop is a loop executed for each code string block. The search is repeated, using the search code string, from the head code string block of the search target code string until its termination code string block. The control flow of this outermost loop is shown in FIG. 6.
The next inner loop is a loop executed for each of the code IDs assigned to the head code in the search code string. The search is repeated in a given code string block, using the search code string, spanning the range of code IDs for the head code of the search code string. The control flow of this next inner loop is shown in FIG. 7A and FIG. 7B.
The innermost loop is a loop comparing each single code of the search code string with those in the code string block. The comparison is repeated for each single code from the head code in the search code string to its tail code. The control flow of this innermost loop is shown in FIG. 8A for full match searches, in FIG. 8B for prefix match searches, and in FIG. 8C for searches including an any-code.

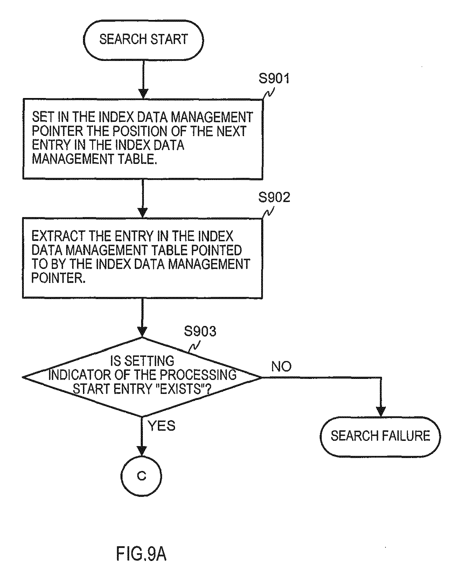

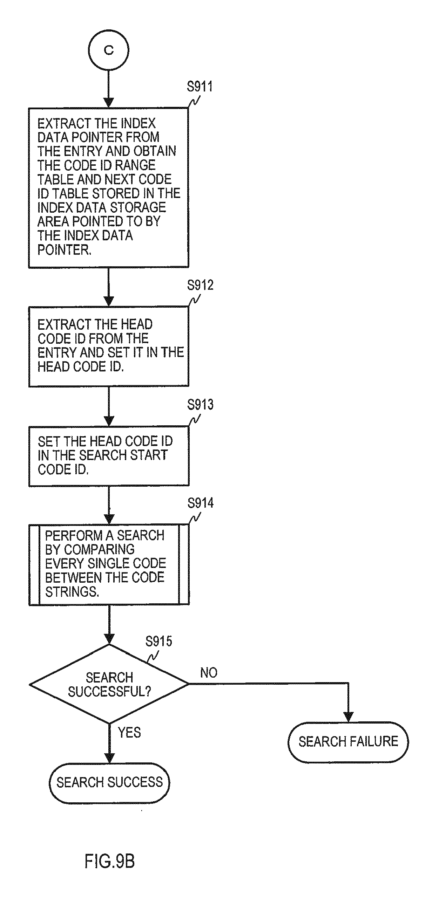

In accordance with the processing flow of the code string search processing in one embodiment of this invention, for each code string block in the outermost processing loop the next inner processing loop is called, and for each code ID assigned to the head code of the search code string, the innermost processing loop is called, and the comparison with each code in the code string block is repeated for each single code from the head code in the search code string to its tail code.
Then, in this invention, the search target code string has been partitioned into code string blocks and, while the above noted comparison of each single code is being repeated in the innermost processing loop, it is possible that the tail position in the code string block could have been reached before a comparison with the tail code in the search code string has been completed. Hence it is necessary to span to the next code string block and to continue the repeated comparison of each single code. The way the continuation of this repeated comparison of each single code is realized is by the next code string block search processing shown in the processing flow of FIG. 9A and FIG. 9B.
Although this search processing is called out by the innermost processing loop, the innermost processing loop is called out recursively in order to repeat the comparison of each single code.

FIG. 6 depicts the above. Thus it is a drawing describing in general the overall processing flow for a code string search in one embodiment of this invention. The flow shown in FIG. 6 consists of the initialization processing and the search processing loop that successively replaces, in the search target code string, the code string block that starts the search with the next code string block.

First, in step S601, the search code string is set. This setting of search code string is that wherein the search code string read out by the search code string read-out means 111 shown in FIG. 2B is set in a temporary storage area and the leading position of the read-out search code string is provided.
Next, in step S602, the head entry position in the index data management table is set in the index data management pointer for the search start position, which is a temporary storage area.
With that, the initialization processing noted above is finished.

Next, proceeding to step S603, the index data management table entry pointed to by the index data pointer for the search start position is extracted, and in step S604, a determination is made whether the setting indicator for the extracted entry shows "Exists". If the setting indicator shows "Exists", processing proceeds to step S605 and if the setting indicator does not show "Exists", processing is terminated because all of the searches have finished.

At step S605, the index data pointer for the entry extracted at step S603 is extracted, and the code ID range table and next code ID table stored in the index data storage area pointed to by the index data pointer are obtained. This obtaining of the code ID range table and next code ID table can be realized by storing pointers showing their starting addresses at the time that the code ID range table and next code ID table are stored in their storage areas in step S503 shown in FIG. 5A and step S541 shown in FIG. 5C, and then using those pointers.

Next in step S606, the head code ID of the entry extracted in step S603 is extracted and set in the head code ID of the search start position. Next in step S608, that code string block is searched based on the code ID range table and the next code ID table obtained in step S605. Details of the processing in step S608 are described below referencing FIG. 7A and FIG. 7B. Next at step S609, the position of the next entry of the index data management table is set in the index management data pointer for the search start position, and processing returns to step S603.

The processing loop of the above steps S603 to S609 is repeated, while updating the index management data pointer for the search start position in step S609, until the determination in step S604 is that the setting indicator of an entry in the index data management table is not "Exists".
Also because there are cases wherein the comparison of each single code spans from the code string block from which the search starts to the next code string block, as was noted above, both the setting processing of the index management data pointer for the search start position in steps S602 and S609 and the setting processing for the head code ID in step S606 save the index data management pointer and the head code ID related to the code string block from which the search starts. This head code ID, as is described referencing FIG. 8A below, is used in the determination whether to proceed to a comparison of a code in the next code string block after the code comparison reaches the end of the current code string block.

Next details of the search processing in step S608 shown in FIG. 6 are described referencing FIG. 7A and FIG. 7B.
FIG. 7A is a drawing describing the processing flow of the prior stage of a code string search that makes a given code string block the search start position of a code string block in one embodiment of this invention.
First, in step S701, the search code string head position is set in the search start position, and at step S702, the tail position of the search code string is set in the search tail position.

Next, at step S703, a search code is extracted from the search code string pointed to by the search head position and is set in the search code OF the search head position. At step S704, the setting indicator is extracted from the code ID range table entry pointed to by the search code at the search head position, and a determination is made at step S705 whether the setting indicator extracted is "Exists".
If the setting indicator is not "Exists", because this means that a search code in the search code string does not exist in the search target code string, search processing is terminated.

If the result of the determination in step S705 is that the setting indicator shows "Exists", processing proceeds to step S706, wherein the head code ID is extracted from the code ID range table entry pointed to by the search code at the search head position and is set in the search start code ID. Next, at step S707, the tail code ID is extracted from the code ID range table entry pointed to by search code in the search head position and is set in the search termination code position.
The processing at step S706 is a processing wherein the search start code ID, which is a code ID during the processing in the above noted processing loop for each of the code IDs for that head code in the search code string, is initialized with the head code ID within the code ID range, and the processing of step S707 is a processing wherein the end of the code IDs subject to processing can be identified.
Following step S707, processing proceeds to step S711 shown in FIG. 7B.

FIG. 7B is a drawing describing the processing flow of the latter stage of a code string search that makes a given code string block the search start position in one embodiment of this invention.
At step S711, the search head position set at step S701 is set in the current search position. The current search position shows the code position of the code that is the target of verification in the loop that verifies the code string block for each code in the search code string shown in the above noted FIG. 8A and so forth, and, at step S711, is initialized with the search head position, that is the head position of the search code string.
Next in step S712, the index data management pointer of the search start position set in step S602 shown in FIG. 6 is set in the index data management pointer, and at step S713, the head code ID at the search start position set at step S607 shown in FIG. 6 is set in the head code ID, which is in a temporary storage area. Also in step S714 the search start code ID is saved and processing proceeds to step S715.

Here, the search start code ID is saved because, as was noted above, there is a possibility that the code string verification in the processing in step S715 can span a plurality of code string blocks. In that case, the processing of FIG. 8A and so forth is called recursively and then there is a possibility that the search start code ID might be changed in the head code ID of the code ID range table pointed to by the code at the head of the next code string block (the table corresponding to the next code string block).

Next, at step S715, as was noted above, a search is performed by means of a verification of each code from the leading code of the search code string to its last code for each of the codes in the code string block. Then whether the search has been a success or a failure is reported back. The details of step S715 are described below referencing FIG. 8A for a full match search, FIG. 8B for a prefix match search, and FIG. 8C for search processing including an any-code.

Next in step S716 the search start code ID saved at step S714 is restored. Then in step S717, an entry in the index data management table pointed to by the index data management pointer for the search start position is extracted and, at step S718, the code ID range table and the next code ID table stored in the index data storage area pointed by the index data pointer of the extracted entry are acquired. As was noted above, there is a possibility that the code string verification in the processing in step S715 can span a plurality of code string blocks, and, in that case, because the code ID range table and next code ID table being used may be different than the code ID range table and next code ID table acquired at step S605 shown in FIG. 6, the processing of steps S717 and S718 once again acquire the code ID range table and next code ID table using the index data management pointer for the search start position set in step S602 or step S607 shown in FIG. 6.

Next, proceeding to step S719, a determination is made whether the search in step S715 has been a success or a failure. If it has been a failure, processing proceeds to step S721, and if it has been a success, at step S720 a code position is extracted from the next code ID table entry pointed to by the search start code ID, and the position of the search result code position is output, and processing proceeds to step S721.

At step S721, a determination is made whether the search start code ID coincides with the search termination code ID. If they do not coincide, at step S722 the search start code ID is updated with the next code ID and a return is made to step S711.
If the search start code ID coincides with the search termination code ID, a return is made to the processing shown in FIG. 6 because the search has been completed for the range of code IDs in the code ID range table pointed to by the head code of the search code string in the code string block currently being processed.

Next, details of the processing of step S715 shown in fig. 7B are described referencing FIG. 8A, FIG. 8B, and FIG. 8C. As was noted above, depending on whether the search mode is a full match search or a prefix match search or a search including an any-code, the processing in step S715 becomes that exemplified in either FIG. 8A, FIG. 8B, or FIG. 8C.

FIG. 8A is a drawing describing the processing flow for a full match search in one embodiment of this invention.
As shown in the drawing, at step S810, the search start code ID is set in the code ID pointer. This search start code ID is either the ID initialized at step S706 shown in FIG. 7A or the ID updated and set in step S722 shown in FIG. 7B. Next, at step S811, a next code ID is extracted from the next code ID table entry pointed to by the code ID pointer and is set in the search code ID and in the code ID pointer.

Next, at step S812, a determination is made whether the current search position is the search tail position, and if it is not at the search tail position, processing proceeds to step S813, and if it is at the search tail position, because the verification for each of the codes has succeeded up to the tail of the search code string, "search success" is returned and processing returns to the processing loop shown in FIG. 7B.
At step S813, a determination is made whether the next code ID extracted at step S81 coincides with the head code ID. The head code ID is the ID set at step S713 shown in FIG. 7B. If the next code ID and head code ID don't coincide, processing proceeds to step S814, wherein the current search position is advanced to the position of the next search code in the search code string, and at step S815, the search code is extracted from the search code string pointed to by the current search position, and at step S816, the head code ID and the tail code ID are extracted from the code ID range table entry pointed to by the extracted search code.

Then in step S817, a determination is made whether the search code ID set in step S811 is within the range of the head code ID and tail code ID extracted in step S816, and if it is within that range, processing returns to step S811, and if it is not within that range, because a code exists that cannot be verified, "search fail" is returned and processing returns to the processing loop shown in FIG. 7B.

Conversely, at step S813, when the determination is that the next code ID and the head code ID coincide, processing proceeds to step S818, and the next code string block is searched. Details of the processing in step S818 are described hereinafter referencing FIG. 9A and FIG. 9B.

Next, in step S819, a determination is made whether the search of the next code string block has been a success. If it has been a success, "search success" is returned, and if it has been not a success, "search failure" is returned, and a return is made to the processing loop shown in FIG. 7B.

FIG. 8B is a drawing describing the processing flow of prefix match searches in one embodiment of this invention. Comparing this processing with the processing flow of the full match search shown in FIG. 8A, the processing itself executed in each step of step S830 to step 838 shown in FIG. 8B is the same as the processing executed in each step from step S810 to step S818 shown in FIG. 8A, where the value 20 is subtracted from each step number in FIG. 8B.

However, instead of a return to the processing shown in FIG. 7B with the return of "search failure" when the determination at step S817 is that the search code ID is not within the range of the head code ID and tail code ID, even if a determination at step S837 of the prefix match search shown in FIG. 8B is that the search code ID is not within the range of the head code ID and tail code ID, "search success" is returned and a return is made to the processing loop shown in FIG. 7B.
Also in step S831, in addition to the next code IDs, code positions can be also successively extracted and set aside from the entries in the next code ID table pointed to by the code ID pointers, and, when a determination is made in step S837 that the search code ID is not within the range of the head code ID and the tail code ID, the code position last extracted at step S831 and "search success" can both be returned as search results. This last extracted code position is the code position stored in the same entry in the next code ID table as the next code ID which is the search code ID when the determination is negative in the above step S857. Thus the codes in the search target code string coincide with the search codes in the search code string up until this code position. By outputting at step S720 shown in FIG. 7B the above last extracted code position and the code position extracted from the next code ID table entry pointed to by the search start code as search result code positions, it becomes possible to know a range of code positions in the search target code string wherein the codes have a prefix match with the search code string.

Also instead of making a determination, at step S819 in the full match search shown in FIG. 8A, whether the next block search has been a success after the search of the next code string block at step S818, and if it has been a success, returning "search success", and if it has not been a success, returning "search failure", and making a return to the processing loop shown in FIG. 7B, in the prefix match search shown in FIG. 8B, after the search of the next code string block at step S838, "search success" is immediately returned and a return is made to the processing loop shown in FIG. 7B.

This means that the head search code in the search code string is guaranteed to exist in the search target code string by the determination processing of step S705 shown in FIG. 7A, and thus, because there is a prefix match between at least the head code of the search code string and the search target code string, "search success" is returned and a return is made to the processing loop shown in FIG. 7B.
Because the processing, other than the processing of the return type after the determination in the above noted step S837 and the processing of step S838 and below, is completely the same as that shown in FIG. 8A, as was noted above, the description of that processing is omitted.

FIG. 8C is a drawing describing the flow of a search that includes an any-code in one embodiment of this invention. Here, "any-code" is a code that makes any code in the search target code string acceptable as a match. If a search code string includes an any-code and a code string matching all the codes except the any-code exists in the search target code string, then that search target code string is a hit for the search code string that includes the any-code.

When the flow shown in FIG. 8C is compared with the processing flow for performing the full match search shown in FIG. 8A, the processing executed in each step of steps S850 to S859 shown in FIG. 8C (with 40 subtracted from those step numbers) is exactly the same as the processing executed in each step of steps S810 to S819 shown in FIG. 8A except for the insertion of the processing of step S855a between steps S855 and S856.

At step S855a, a determination is made whether the search code extracted at step S855 is an any-code. When the determination at step S855a is that of an any-code, processing returns to step 851 and does not pass through the code ID range determination processing of step S856 and step S857.
If the determination at step S855a is not that of an any-code, processing proceeds to step S856.
Because, as was noted above, all of the processing is the same as that shown in FIG. 8A except for the determination processing of the above step S855a, that description is omitted.

Next details of the search processing of the next code string block of step S818 shown in FIG. 8A, step S838 shown in FIG. 8B, and step S858, shown in FIG. 8C, is described.
FIG. 9A is a drawing describing the processing flow of the prior stage of a search for the next code string block in one embodiment of this invention.

As shown in the drawing, at step S901, the position of the next entry in the index data management table is set in the index data management pointer. At this time, the index data management pointer for the search start position has been set in step S712 shown in FIG. 7B. Next proceeding to step S902 the entry in the index data management table pointed to by the index data management pointer is extracted, and in step S903 a determination is made whether the setting indicator for the entry shows "Exists".

If the setting indicator is not "Exists", because no more code string blocks exist and the comparison of every single code is aborted, "search failure" is returned and processing returns to the processing shown in FIG. 8A, FIG. 8B, or FIG. 8C.

Conversely, when the determination in step S903 is that the setting indicator for the entry shows "Exists", processing proceeds to the steps S911 and thereafter shown in FIG. 9B, and the comparison of every single code proceeds further.

FIG. 9B is a drawing describing the processing flow of the latter stage of a search for the next code string block in one embodiment of this invention.

At step S911, the index data pointer is extracted from the entry previously extracted at step S902 shown in FIG. 9A and a code ID range table and next code ID table stored in the index data storage area pointed to by the index data pointer are obtained.

Next, in step S912, the head code ID in the index management table is extracted and set in the head code ID, which is a temporary storage area, and at step S913, that head code ID is set in the search start code ID and processing proceeds to step S914.

At step S914, the processing shown in FIG. 8A, FIG. 8B, or FIG. 8C is recursively called out, and a search is performed by comparing each code in the code string block with every single code in the search code string from its head code to its tail code. Then whether the search has been a success or a failure is reported.
At step S915, if the search at step S914 is successful, "search success" is returned, and if the search at step S914 is a failure, "search failure" is returned, and processing returns to the processing shown in FIG. 8A, FIG. 8B, or FIG. 8C.

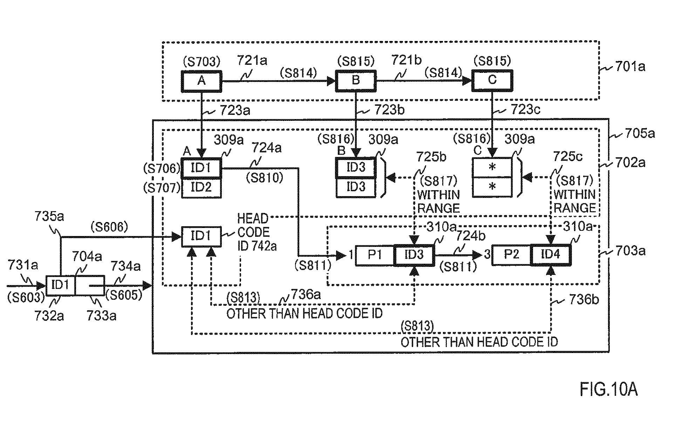

Hereinabove, details of a preferred embodiment of this invention was described. Hereinbelow, in order to facilitate an understanding of this invention, the flow of processing in a full match search, which is one of the code string searches in a preferred embodiment of this invention, is described referencing FIG. 10A to FIG. 10C. In the examples shown in FIG. 10A to FIG. 10C, the search target code string is taken as the that of the code string blocks up to the second block shown in FIG. 3A, and the search code string is taken as "ABC". Hereinafter, that search target code string is taken to be that expressed in the search target code string 10a, just as is shown in FIG. 3A.

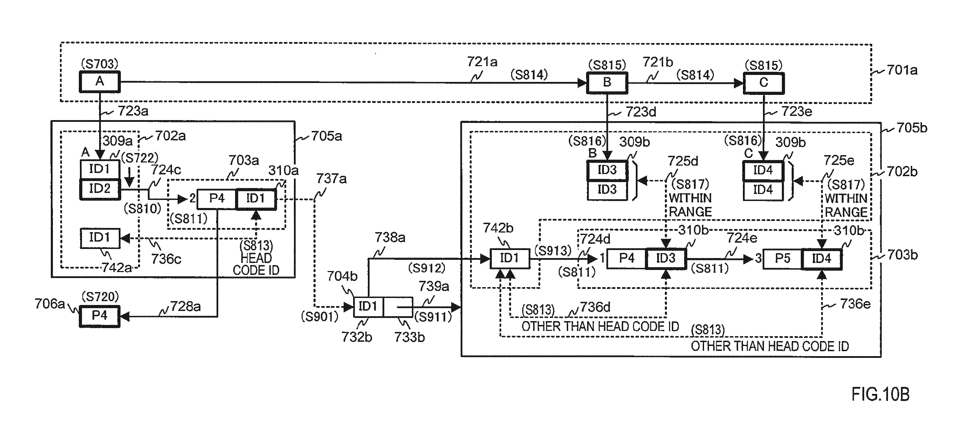

FIG. 10A and FIG. 10B are drawings describing the flow of processing from the head code string block of a search target code string, and, regarding the outermost processing loop shown in FIG. 6, is equivalent to the first processing loop.
FIG. 10A describes the flow of a search that takes as its target the head code string block among all the code string blocks.
The block to which the reference numeral 701a is affixed delineates the flow of the processing of each of the search codes in the search code string ABC from its head. In other words, block 701 a shows the changes in the code at the current search position. The block enclosed in a dotted line to which the reference numeral 702a is affixed delineates the code ID range in the code ID range table 309a entry pointed to by the code at the current search position and ID 1, which is the head code ID 742a in the code ID range table 309a entry pointed to by code A, which is at the head position in the code string block. The block to which the reference numeral 703a is affixed delineates the flow of obtaining in sequence next codes from the next code ID table 310.
Also, the step reference numbers enclosed in parentheses indicate processing steps shown in FIG. 6 to FIG. 9B that are related to the flow of processing shown in the drawing.

For the processing before a search starts, as shown by the arrow 731a in the drawing, at step S603 in FIG. 6 (in the description hereinafter the notation of the figure number is omitted) the head entry 704a in the index data management table is extracted. Then, as shown by arrow 734a, at step S605, the code ID range table 309a and next code ID table 310a stored in the index data storage area 705a are extracted based on the index data pointer 733a for that entry. Then, as shown by arrow 735a, at steps S606, ID 1, which is the head code ID stored in head code ID 732a of entry 704a, is read out and set in head code ID 742a.

First, as shown in 701 a, the code A located at the head of the search code is extracted at step S703 and, as shown by the arrow 723a to 702a, ID 1, which is the head code ID in the code ID range table entry pointed to by code A, is extracted at step S706 and is set in the search start code ID. And ID 1, which is the tail code, is extracted at step S707 and set in the search termination code ID.
Next, as shown by the arrow 724a from ID 1 in block 702a to block 703a, ID 3, which is the next code ID in the next code ID table 310 entry pointed to by ID 1, is extracted at step S810 and step S811. Then, as shown by the bi-directional dotted-line arrow 736a between ID 3, which is the next code ID in the next code ID table 310 entry pointed to by ID 1 in block 703a, and head code ID 742a in block 702a, in step S813, a determination is made that ID 3, which is the next code ID, is different than ID 1, which is the head code ID.

Hence, as shown by the arrow 721a to the codes from A to B in 701a, at step S814 the code at the next code position becomes the target of processing, and at step S815 code B is extracted. As shown by the arrow 723b to 702a, ID 3, which is the head code ID for the code ID range table 309 entry pointed to by code B, and ID 3, which is the tail code ID, are extracted as the code ID range.

Then, as shown by the bidirectional dotted-line arrow 725b between ID 3, which is the next code ID in the next code ID table 310 entry pointed to by ID 1 in 703a, and the range in the code ID range table 309 entry pointed to by code B in 702a, in step S817, a determination is made that ID 3, which is the next code ID in the next code ID table 310 entry pointed to by ID 1, is within the code ID range in the code ID range table 309 entry pointed to by code B.
Hence, next, as shown by the arrow 724b in 703a, ID 4, which is the next code ID in the next code ID table 310 entry pointed to by ID 3, is extracted at step S811. Then, as shown by the bi-directional dotted-line arrow 736b between ID 4, which is the next code ID in the next code ID table 310a entry pointed to by ID 3 in block 703a, and head code ID 742a in block 702a, in step S813 a determination is made that ID 4, which is the next code ID, is different than ID 1, which is the head code ID.

Furthermore, as shown by the arrow 721b from code B to code C in 701 a, at step S814, the code at the next code position becomes the target of processing and at step S815 the code C is extracted. As shown by the arrow 723c to 702a, at step S816, the head code ID and the tail code ID in the code ID range table 309 entry pointed to by code C are extracted as the code ID range. However, as shown in the drawing, because code C does not exist in the head code string block, and a significant code ID is not stored in the head code ID and tail code ID (the IDs are set as "undefined" at step S528a shown in FIG. 5B), the determination at step S813 shown by bi-directional dotted-line arrow 725c is that the next code ID is outside the code range, and the search fails. At that point, "search failure" is returned and processing returns to the processing loop shown in FIG. 7B.
In other words, this shows that the code string starting from the code A for which the code ID is ID 1 in search target code string 10a does not match the search code string ABC. This code string from the code A for which the code ID is ID 1 in search target code string 10a is ABE, as shown in FIG. 3A, and thus does not match ABC.

FIG. 10B shows the flow of a search wherein ID 2, which is the next code ID after the ID 1 of code A, is made the search start code ID for the search code string ABC at step S722. The processing loop shown in FIG. 7B consists of the first time processing shown in FIG. 10A and the second time processing shown in FIG. 10B.
Then, in this second time processing, the comparison between the search target code string and the search code string spans across to the next code string block after the head code string block.

As shown by the arrow in block 702a of FIG. 10B, at step S722 in the processing loop shown in FIG. 7B, the search start code ID is updated from ID 1 to ID 2. Then, as shown by the arrow 724c from ID 2 of block 702a to block 703a, ID 1, which is the next code ID in the next code ID table 310a entry pointed to by ID 2, is extracted by step S810 and step S811. Also, as shown by the bi-directional dotted-line arrow 736c between ID 1, which is the next code ID in the next code ID table 310 entry pointed to by ID 2 in block 703a, and head code ID 742a in block 702a, in step S813, a determination is made that ID 1, which is the next code ID, coincides with ID 1, which is the head code ID.

As a result, as shown by the dotted-line arrow 737a, in step S901, entry 704b, which is the next entry in the index data management table after the head entry 704a, is extracted. Then, as shown by arrow 739a in the drawing, at step S911, the code ID range table 309b and next code ID table 310b stored in the index data storage area 705b are obtained based the index data pointer 733b of entry 704b. Also, as shown by arrow 738a in the drawing, at step S912, ID 1, which is the head code ID stored in the head code ID 732b of entry 704b, is set in the head code ID 742b.

Continuing, as shown by arrow 724d, ID 3, which is the next code ID in the next code ID table 310b entry pointed to by ID 1, which is set in head code ID 742b, is extracted by the processing of step S913 and the processing of step S811 shown in FIG. 8A which is recursively called out. Then, in step S813, as shown by the bi-directional dotted-line arrow 736d between that ID 3 and the head code ID 742b of block 702b, a determination is made that the ID 3 that is the next code ID is different than the ID 1 that is the head code.

At that point, as shown by the arrow 721a from code A in block 701 a to code B, at step S814, the code at the next code position is made the target of processing, and at step S815, the code B next after the head code, code A, is extracted from the search code string. As shown by the arrow 723d to block 702b, at step S816, ID 3, which is the head code ID in the code ID range table 309b entry pointed to by code B, and the ID 3, which is the tail code ID in the same entry, are extracted as the code ID range. Then, as shown by the bidirectional dotted-line arrow 725d between ID 3, which is the next code ID in the next code ID table 310b entry pointed to by ID 1 in block 703b and the code ID range in the code ID range table 309b entry pointed to by code B in block 702b, in step S817, a determination is made that ID 3, which is the next code ID in the next code ID table 310 entry pointed to by ID 1, is within the code ID range in the code ID range table 309b entry pointed to by code B.
As a result, next, as shown by arrow 724e in block 703b, ID 4, which is the next code ID in the next code ID table 310b entry pointed to by ID 3, is extracted at step S811. Then, in step S813, as shown by the bi-directional dotted-line arrow 736e between that ID 4, which is the next code ID, and the head code ID 742b of block 702b, a determination is made that the ID 4 is different than the ID 1 that is the head code.

Next, as shown by the arrow 721b from code B in block 701a to code C, at step S814, the code at the next code position is made the target of processing, and at step S815, the code C is extracted. As shown by the arrow 723e to block 702b, at step S816, ID 4, which is the head code ID in the code ID range table 309b entry pointed to by code C, and the ID 4, which is the tail code ID in the same entry, are extracted as the code ID range.

Then, as shown by the bidirectional dotted-line arrow 725e between ID 4, which is the next code ID in the next code ID table 310b entry pointed to by ID 3 in block 703b and the code ID range in the code ID range table 309b entry pointed to by code C in block 702b, in step S817, a determination is made that ID 4 is within the code ID range in the code ID range table 309b entry pointed to by code C.

In other words, this shows that the code string from the code A for which the code ID is ID 2 in search target code string 10a matches the search code string ABC. This agrees with the fact that the code string from the code A for which the code ID is ID 2 in search target code string 10a is ABC, as shown in FIG. 3A.
Then at step S720, as shown by arrow 728a, the code position P4 for the next code ID table 310a entry pointed to by ID 2, which is the search start code ID, is set in the search result code position shown by reference numeral 706a.

Then, because ID 2, which is the search start code ID, is the search termination code ID specified in step S707, the search of the head code string block with that search start position is terminated and a return is made to the processing loop shown in FIG. 6, wherein the search start position is incremented by 1, in other words, a search is performed from the top of the second code string block.

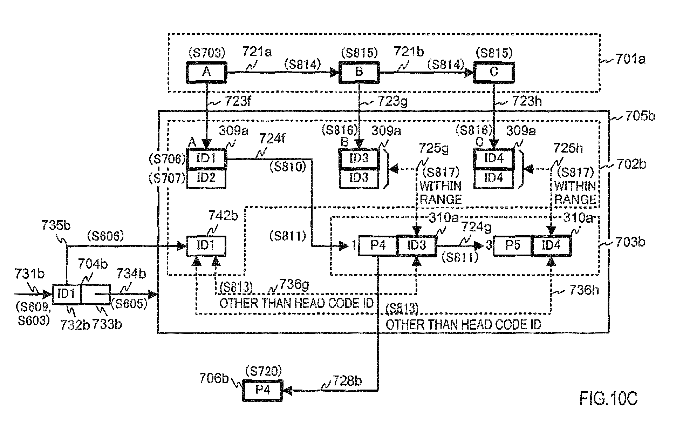

FIG. 10C is a drawing describing the flow of processing from the second code string block in the search target code string, and, regarding the outermost processing loop shown in FIG. 6, is equivalent to the processing of the second time through the loop. The flow of processing described hereinafter is the same as that described above referencing FIG. 10A.
As shown by arrow 731b in the drawing, the value of the index data management pointer for the search start position has been updated in step S609 in the processing before the start of the search, and at step S603 the top entry 704b in the index data management table is extracted. Then, as shown by the arrow 734b, at step S605, based on the index data pointer 733b of that entry, the code ID range table 309b and next code ID table 310b stored in the index data storage area 705b are extracted. Also, as shown by the arrow 735b, at steps S606, the ID 1, which is the head code ID stored in the head code ID 732b of that entry 704b, is read out and is set in head code ID 742b.

At the beginning of the search from the second code string block, in step S703, the code A, which is located at the head of the search code string, is extracted again, as shown in block 701a. Then, as shown by the arrow 723f to block 702b, the ID 1 that is the head code ID in the entry in code ID range table 309b pointed to by code A is extracted at step S706 and set in the search start code ID. Also, at step S707 the ID 2 that is the tail code is extracted and set in the search termination code ID.
Next, as shown by arrow 724f from the ID 1 of block 702b to block 703b, ID 3, which is the next code ID in the next code ID table 310 entry pointed to by ID 1, is extracted by steps S810 and S811. Then, as shown by the bi-directional dotted-line arrow 736g between ID 3, which is the next code ID in the next code ID table 310 entry pointed to by ID 1 in block 703b, and head code ID 742b in block 702b, in step 5813, a determination is made that ID 3, which is the next code ID, is different than ID I, which is the head code ID.

As a result, as shown by arrow 721 a from code A in block 701a to code B, at step S814, the code at the next code position becomes the target of processing, and code B is extracted at step S815. As shown by arrow 723g to block 702b, at step S816, the ID 3 that is the head code ID in the code ID range table 309b entry pointed to by code B and the ID 3 that is its tail code are extracted as the code ID range.

Then, as shown by the bi-directional dotted-line arrow 725g between ID 3, which is the next code ID in the next code ID table 310b entry pointed to by ID 1 in block 703b, and the code ID range in the code ID range table entry pointed to by code B, in step S817, a determination is made that ID 3, which is the next code ID in the next code ID table 310b entry pointed to by ID 1, is within the code ID range in the code ID range table entry pointed to by code B.
As a result, next, as shown by the arrow 724g in block 703b, at step S811, ID 4, which is the next code ID in the next code ID table 310b entry pointed to by ID 3, is extracted. Then, as shown by the bi-directional dotted-line arrow 736h between ID 4, which is the next code ID in the next code ID table 310 entry pointed to by ID 3 in block 703b, and head code ID 742b in block 702b, in step S813, a determination is made that ID 4, which is the next code ID, is different than ID 1, which is the head code ID.

Next, as shown by arrow 721b from code B in block 701a to code C, at step S814, the code at the next code position becomes the target of processing, and code C is extracted at step S815. As shown by arrow 723h to block 702b, at step S816, the ID 4 that is the head code ID in the code ID range table 309b entry pointed to by code C and the ID 4 that is its tail code are extracted as the code ID range.

Then, as shown by the bi-directional dotted-line arrow 725h between ID 4, which is the next code ID in the next code ID table 310b entry pointed to by ID 3 in block 703b, and the code ID range in the code ID range table entry pointed to by code C, in step S817, a determination is made that ID 4, which is the next code ID in the next code ID table 310b entry pointed to by ID 3, is within the code ID range in the code ID range table entry pointed to by code C.

In other words, this shows that the code string from the code A for which the code ID is ID 1 in search target code string 10a matches the search code string ABC. This agrees with the fact that, of the codes in the second code string block 15b, the code string from the code A for which the code ID is ID 1 is ABC, as shown in FIG. 3A.
Then at step S720, as shown by arrow 728b, the code position P4 for the next code ID table 310a entry pointed to by ID 1, which is the search start code ID, is set in the search result code position shown by reference numeral 706b.

Then, because ID 1, which is the search start code ID, is not the search termination code ID specified in step S707, at step S722 shown in FIG. 7B, the search start code is updated to ID 2, and search operations are further continued. However, because this processing is the same as the processing described referencing FIG. 10B, this description is omitted.

Although the above described details of embodiments for implementing this invention, it is not limited to that embodiments and it will be clear to one skilled in the art that various modifications are possible.
Also it is clear that the code string apparatus, with the storage means holding the index data management table, the code ID range table, and the next code ID table can be constructed on a computer by programs that cause the computer to execute the processing shown in FIG. 6 to FIG. 9B.

It is also clear that the index data creation apparatus and method of this invention can be implemented by programs executing on a computer the processing of creating index data for the code string search shown in FIG. 4A to FIG. 5C and art-recognized equivalents. Hence the means for creating the index data of this invention and so forth can be implemented on a computer by those programs.
Therefore, the programs, and a computer-readable storage medium into which the programs are stored are encompassed by the embodiments of the present invention. Furthermore, the data configuration of the index data for the code string searches of this invention and a computer-readable storage medium wherein is stored the index data using that data configuration are also encompassed by the embodiments of the present invention.

By using the new index data configurations of the code ID range table and next code ID table and the index data management table provided by this invention, the burden of creating index data is reduced and code string searches can be performed efficiently.
Also, in accordance with this invention, because the index data can be partitioned and stored in a plurality of storage areas, even if there is a profusion of index data, the code string block size can be optimized to fit the hardware environment being used and access to and maintenance of the index data can be made easy.

## Claims

1. A code string search apparatus for searching search target code strings (10a) that are the object of a search by means of a search code string (40a), comprising:
code ID range tables (309), each of the code ID range tables (309) holding a code ID range for each code of the same type, which is a range of code IDs uniquely identifying each and every code located in each of code string blocks (15) that are parts of a search target code string (10a) that is partitioned into a plurality of the code string blocks (15), and are designed so that tail codes of the code string blocks (15) are duplicated in the head codes of following code string blocks (15);
next code ID tables (310), each of the next code ID tables (310) holding, corresponding to each of the code IDs, a next code ID, which is a code ID of a code located next after a code whose code ID is said each of the code IDs in a code string block (15) that is a part of the search target code string (10a), and if a code is located in tail position (13) in a code string block (15b), a next code ID table (310b) holds, as a next code ID corresponding to a code ID of the code in the tail position (13), a code ID of a code located in a head position (12) of the code string block (15b);
a search execution part (116) for executing searches with a search code string (40a), referencing the code ID range tables (309) and the next code ID tables (310);
an index data management table (321) holding, for each code string block (15), a head code ID which is a code ID of a head code of the code string block (15);
a search management part (115) that manages an execution of a search by the search execution part (116);
wherein the search execution part (116) is provided with a search code string read-out means (111) that reads out a search code string (40a), and
a code ID range read-out means (112) that successively reads out from the code ID range table (309) corresponding to a specified code string block (15) a code ID range pointed to by a code type of each code from the head code or a second code in the search code string (40a) read out by the search code string read-out means (111), and
a next code ID read-out means (113) that reads out from the next code ID table (310) corresponding to the specified code string block (15) a next code ID pointed to by a code ID included within the code ID range read out by the code ID range read-out means (112) for the code type of the head code in the search code string (40a) or a next code ID held corresponding to the head code ID in the specified code string block (15) and stored in the index data management table (321), and after that successively reads out from the next code ID table (310) for a specified code string block (15) the next code ID held corresponding to the read-out next code ID, and makes a determination whether the next code ID coincides with the head code ID in the code string block (15), and
a code ID verify means (114) that, when the next code ID read out by the next code ID read-out means (113) does not coincide with the code ID of the head code in the code string block (15), verifies whether the next code ID is included within the code ID range read out by the code ID range read-out means (112); and
wherein
the search management part (115) successively specifies to the search execution part (116) a code string block (15) starting from the first code string block (15a) and,
when it is determined by the next code ID read-out means (113) that the next code ID read out coincides with the code ID of the head code in the code string block (15a),
specifies to the search execution part (116) a code string block (15b) located next after the code string block (15a), and
when the search management part (115) successively specifies a code string block (15),
the code ID range read-out means (112) successively reads out a code ID range of a code type for each code starting from the head code in the search code string (40a), and
the next code ID read-out means (113) first reads out from the next code ID table (310) corresponding to the specified code string block (15) the next code ID held corresponding to a code ID included within the code ID range for the code type of the head code in the search code string (40a), and
when the search management part (115) specifies a code string block (15) located next,
the code ID range read-out means (112) successively reads out a code ID range of a code type for each code starting from the next code in the search code string (40a), and
the next code ID read-out means (113) first reads out from next code ID table (310) corresponding to the specified code string block (15) the next code ID held corresponding to the head code ID which is held in the index data management table entry (321) for the specified code string block (15).

2. A code string search apparatus according to claim 1, wherein
when the code ID of a search code string head code (332a) in the search code string (40a), which is a code ID included in the code ID range (336a), read out by the code ID range read-out means (112), for the code type of the search code string head code (332a) in the search code string (40a) or the head code ID (341b) which is held in the index data management table entry (321) for the specified code string block (15b) is taken to be a first code ID and a code whose code ID is the first code ID is taken to be a first code (332a, 332b),
the code ID verify means (114) verifies whether the next code ID (337a, 337c) held in the next code ID table (310a, 310b) corresponding to the first code ID is included in the code ID range (336b, 336c) corresponding to a code type of a second code (332b, 332c), which is a code located next to the first code (332a, 332b) in the search code string (40a), and thereafter,
when the positions in the search code string (40a) of the first code (332a, 332b) and the second code (332b, 332c) are updated by the read-out operation of the code ID range read-out means (112) and the next code ID read-out means (113), the code ID verify means (114) verifies whether the next code ID held corresponding to the code ID of the first code, whose position has been updated, is included within the code ID range for the code type of the second code, whose position has been updated.

3. A code string search apparatus according to claim 2, wherein
the next code ID table (310) holds, corresponding to each of the code IDs, a code position which shows the position of said each of the code IDs in the search target code string (10a), and
when the verification whether the next code ID read out by the next code ID read-out means (113) is included within the code ID range read out by the code ID range read-out means (112) succeeds from a head code of the search code string (10a) to a tail code of the search code string (10a),
the code ID verify means (114) outputs as a search result code position a code position held in the next code ID table (310) corresponding to the code ID of the head code.

4. A code string search apparatus according to claim 3, wherein
a next code ID and a code position held in a next code ID table (310) corresponding to a code ID are held contiguously in code position sequence for each code ID of codes with the same code type.

5. A code string search apparatus according to claim 4, wherein
the code ID verify means (114), using each of all the code IDs included within the code ID range pointed to by the code type of the head code in the search code string (40a) as the code ID of the head code of the search code string (40a), verifies whether the next code ID read out by the next code ID read-out means (113) is included within the code ID range read out by the code ID range read-out means (112).

6. A code string search apparatus according to claim 5, wherein
the code ID verify means (114) outputs as search result code positions, when the verification of whether a next code ID read out by the next code ID read-out means (113) is included within the code ID range read out by the individual code ID range read-out means (112) fails, the code position held in the same entry in the next code ID table (310) in which the next code ID is held and the code position held in the next code ID table entry (310) corresponding to the code ID of the head code.

7. A code string search apparatus according to claim 5, wherein
the search code string (40a) includes an any-code to verify any codes, and instead of verifying whether the next code ID read out by the next code ID read-out means (113) is included in the code ID range read out by the code ID range read-out means (112) taking the any-code as the second code,
the code ID verify means (114) performs verification on the code located after the any-code in the search code string (40a) as the second code.

8. A code string search method performed by a code string search apparatus for searching search target code strings (10a) that are the object of a search by means of a search code string (40a), wherein the code string search apparatus has code ID range tables, each of the code ID range tables (309) holding a code ID range for each code of the same type, which is a range of code IDs uniquely identifying each and every code located in each of code string blocks (15) that are parts of a search target code string (10a) that is partitioned into a plurality of the code string blocks (15), and are designed so that tail codes of the code string blocks (15) are duplicated in the head codes of following code string blocks (15), and
next code ID tables (310), each of the next code ID tables (310) holding, corresponding to each of the code IDs, a next code ID, which is a code ID of a code located next after a code whose code ID is said each of the code IDs in a code string block (15) that is a part of the search target code string (10a), and if a code is located in tail position (13) in a code string block (15b), a next code ID table (310b) holds, as a next code ID corresponding to a code ID of the code in the tail position (13), a code ID of a code located in a head position (12) of the code string block (15b), and
an index data management table (321) holding, for each code string block (15), a head code ID which is a code ID of a head code of the code string block (15), and
a search execution part (116) and a search management part (115), the method comprising:
a search code string read-out step (S601) executed by the search execution part (116) that reads out a search code string (40a);
a code ID range read-out step (S706, S707, S816) executed by the search execution part (116) that successively reads out from the code ID range table (309) corresponding to a specified code string block (15) a code ID range pointed to by a code type of each code from the head code or a second code in the search code string (40a) read out at the search code string read-out step;
a next code ID read-out step (S811, S813) executed by the search execution part (116) that reads out (S811) from the next code ID table (310) corresponding to the specified code string block (15) a next code ID pointed to by a code ID included within the code ID range read out at the code ID range read-out step (S706, S707, S816) for the code type of the head code in the search code string (40a) or a next code ID held corresponding to the head code ID in the specified code string block (15) and stored in the index data management table (321), and after that successively reads out from the next code ID table (310) for a specified code string block (15) the next code ID held corresponding to the read-out next code ID, and makes a determination (S813) whether the next code ID coincides with the head code ID in the code string block (15);
a code ID verify step (S817) executed by the search execution part (116) that, when the next code ID read out at the next code ID read-out step does not coincide with the code ID of the head code in the code string block (15), verifies whether the next code ID is included within the code ID range read out at the code ID range read-out step;
a search start position specifying step (S602, S609) executed by the search management part (115) that successively specifies to the search execution part (116) a code string block (15) from the first code string block (15a);
a next code string block specifying step (S901) executed by the search management part (115) that, when it is determined at the next code ID read-out step that the next code ID read out coincides with the code ID of the head code in the code string block (15a), specifies to the search execution part (116) the code string block (15b) located next after the code string block (15a); and wherein
after the search management part (115) executes the search start position specifying step (S602, S609),
the code range read-out step (S706, S707, S816) successively reads out a code ID range of a code type for each code starting from the head code in the search code string (40a), and
the next code ID read-out step (S811, S813) first reads out from next code ID table (310) corresponding to the specified code string block (15) the next code ID held corresponding to a code ID included within the code ID range for the code type of the head code in the search code string (40a), and
after the search management part (115) executes the next code string specifying step (S901),
the code ID range read-out step (S706, S707, S816) successively reads out a code ID range of a code type for each code starting from the next code in the search code string (40a), and
the next code ID read-out step (S811, S813) first reads out from next code ID table (310) corresponding to the specified code string block (15) the next code ID held corresponding to the head code ID which is held in the index data management table entry (321) for the specified code string block (15).

9. A code string search method according to claim 8, wherein
when the code ID of a search code string head code (332a) in the search code string (40a), which is a code ID included in the code ID range (336a), read out at the code ID range read-out step (S706, S707, S816), for the code type of the search string head code (332a) in the search code string (40a) or the head code ID (341b) which is held in the index data management table entry (321) for the specified code string block (15b) is taken to be a first code ID and a code whose code ID is the first code ID is taken to be a first code (332a, 332b),
the code ID verify step (S817) verifies whether the next code ID (337a, 337c) held in the next code ID table (310a, 310b) corresponding to the first code ID is included in the code ID range (336b, 336c) corresponding to a code type of a second code (332b, 332c), which is a code located next to the first code (332a, 332b) in the search code string (40a), and thereafter,
when the positions in the search code string (40a) of the first code (332a, 332b) and the second code (332b, 332c) are updated by the read-out operation of the code ID range read-out step (S706, S707, S816) and the next code ID read-out step (S811, S813), the code ID verify step (S817) verifies whether the next code ID held corresponding to the code ID of the first code, whose position has been updated, is included within the code ID range for the code type of the second code, whose position has been updated.

10. A code string search method according to claim 9, wherein
the next code ID table (310) holds, corresponding to each of the code IDs, a code position which shows the position of said each of the code IDs in the search target code string (10a), and
when the verification whether the next code ID read out at the next code ID read-out step (S811, SS813) is included within the code ID range read out at the code ID range read-out step (S706, S707, S816) succeeds from a head code of the search code string (10a) to a tail code of the search code string (10a),
the code ID verify step (S817) outputs as a search result code position a code position held in the next code ID table (310) corresponding to the code ID of the head code.

11. A code string search method according to claim 10, wherein
the code ID verify step (S817), using each of all the code IDs included within the code ID range pointed to by the code type of the head code in the search code string (40a) as the code ID of the head code of the search code string (40a), verifies whether the next code ID read out at the next code ID read-out step (S811, S813) is included within the code ID range read out at the code ID range read-out step (S706, S707, S816).

12. A code string search program for realizing functions of a code string search apparatus in a computer, wherein the code string search apparatus has code ID range tables (309), each of the code ID range tables (309) holding a code ID range for each code of the same type, which is a range of code IDs uniquely identifying each and every code located in each of code string blocks (15) that are parts of a search target code string (10a) that is partitioned into a plurality of the code string blocks (15), and are designed so that tail codes of the code string blocks (15) are duplicated in the head codes of following code string blocks (15), and
next code ID tables (310), each of the next code ID tables (310) holding, corresponding to each of the code IDs, a next code ID, which is a code ID of a code located next after a code whose code ID is said each of the code IDs in a code string block (15) that is a part of the search target code string (10a), and if a code is located in tail position (13) in a code string block (15b), a next code ID table (310b) holds, as a next code ID corresponding to a code ID of the code in the tail position (13), a code ID of a code located in a head position (12) in the code string block (15b), and
an index data management table (321) holding, for each code string block (15), a head code ID which is a code ID of a head code of the code string block (15), and
a search execution part (116) and
a search management part (115), the functions comprising:
a search code string read-out function (111) of the search execution part (116) that reads out a search code string (40a);
a code ID range read-out function (113) of the search execution part (116) that successively reads out from the code ID range table (309) corresponding to a specified code string block (15) a code ID range pointed to by a code type of each code from the head code or a second code in the search code string (40a) read out by the search code string read-out function (111);
a next code ID read-out function (113) of the search execution part (116) that reads out from the next code ID table (310) corresponding to the specified code string block (15) a next code ID pointed to by a code ID included within the code ID range read out by the code ID range read-out function (112) for the code type of the head code in the search code string (40a) or a next code ID held corresponding to the head code ID in the specified code string block and stored in the index data management table (321), and after that successively reads out from the next code ID table (310) for a specified code string block (15) the next code ID held corresponding to the read-out next code ID, and makes a determination whether the next code ID coincides with the head code ID in the code string block (15);
a code ID verify function (114) of the search execution part (116) that, when the code ID read out by the next code ID read-out function (113) does not coincide with the code ID of the head code in the code string block (15), verifies whether the next code ID is included within the code ID range read out by the code ID range read-out function (112);
a search start position specifying function (S602, S609) of the search management part (115) that successively specifies to the search execution part (116) a code string block (15) starting from the first code string block (15a);
a next code string specifying function (S901) of the search management part (115) that, when it is determined by the next code ID read-out function that the next code ID read out coincides with the code ID of the head code in a code string block (15a), specifies to the search execution part (116) the code string block (15b) located next after the code string block (15a); and wherein,
when implementing the search start position specifying function (S602, S609) as a function of the search management part (115),
the code range read-out function (113) successively reads out a code ID range of a code type for each code starting from the head code in the search code string (40a), and
the next code ID read-out function (113) first reads out from next code ID table (310) corresponding to the specified code string block (15) the next code ID held corresponding to a code ID included in the code ID range for the code type of the head code in the search code string (40a), and
when implementing the next code string specifying function (S901) as a function of the search management part (115),
the code ID range read-out function (113) successively reads out a code ID range of a code type for each code starting from the next code in the search code string (40a), and
the next code ID read-out function (113) first reads out from next code ID table (310) corresponding to the specified code string block (15) the next code ID held corresponding to the head code ID which is held in the index data management table entry (321) for the specified code string block (15).

13. A code string search program according to claim 12, wherein,
when the code ID of a search code string head code (332a) in the search code string (40a), which is a code ID included in the code ID range (336a), read out by the code ID range read-out function (113), for the code type of the search string head code (332a) in the search code string (40a) or the head code ID (341b) which is held in the index data management table entry (321) for the specified code string block (15b) is taken to be a first code ID and a code whose code ID is the first code ID is taken to be a first code (332a, 332b),
the code ID verify function (114) verifies whether the next code ID (337a, 337c) held in the next code ID table (310a, 310b) corresponding to the first code ID is included in the code ID range (336b, 336c) corresponding to a code type of a second code (332b, 332c), which is a code located next to the first code (332a, 332b) in the search target code string (40a), and thereafter,
when the positions in the search code string (40a) of the first code (332a, 332b) and the second code (332b, 332c) are updated by the read-out operation of the code ID range read-out function (112) and the next code ID read-out function (113), the code ID verify function (114) verifies whether the next code ID held corresponding to the code ID of the first code, whose position has been updated, is included within the code ID range for the code type of the second code, whose position has been updated.

14. A code string search program according to claim 13, wherein
the next code ID table (310) holds, corresponding to each of the code IDs, a code position which shows position of the each of the code IDs in the search target code string (10ta), and
when the verification whether the next code ID read out by the next code ID read-out function (113) is included in the code ID range read out by the individual code ID range read-out function (112) succeeds from the head code of the search code string (10a) to a tail code of the search code string (10a),
the code ID verify function (114) outputs as the search result code position the code position held in the next code ID table (310) corresponding to the code ID of the head code.

15. A code string search program according to claim 14, wherein
the code ID verify function (114), using each of all the code IDs included within the code ID range pointed to by the code type of the head code in the search code string (40a) as the code ID of the head code in the search code string (40a), verifies whether the next code ID read out by the next code ID read-out function (113) is included within the code ID range read out by the code ID range read-out function (112).

16. A computer readable storage medium holding the code string search program according to any one of claim 12 to claim 15.

17. A data configuration adapted to a code string search method for searching search target code strings (10a) that are the object of a search by means of a search code string (40a), comprising:
code ID range tables (309), each of the code ID range tables (309) holding a code ID range for each code of the same type, which is a range of code IDs uniquely identifying each and every code located in each of code string blocks (15) that are parts of a search target code string (10a) that is partitioned into a plurality of the code string blocks (15), and are designed so that tail codes of the code string blocks (15) are duplicated in the head codes of following code string blocks (15);
next code ID tables (310), each of the next code ID tables (310) holding, corresponding to each of the code IDs, a next code ID, which is a code ID of a code located next after a code whose code ID is said each of the code IDs in a code string block (310) that is a part of the search target code string (10a), and if a code is located in tail position (13) in a code string block (15b), a next code ID table (310b) holds, as a next code ID corresponding to a code ID of the code in the tail position (13), a code ID of a code located in a head position (12) of the code string block (310b);
an index data management table (321) holding, for each code string block (15), a head code ID which is a code ID of a head code of the code string block (15); and wherein
a code string search apparatus provided with a search execution part and a search management part is enabled to perform a code string search method comprising:
a search code string read-out step (S601) executed by the search execution part (116) that reads out a search code string (40a);
a code ID range read-out step (S706, S707, S816) executed by the search execution part (116) that successively reads out from the code ID range table (309) corresponding to a specified code string block (15) a code ID range pointed to by a code type of each code from the head code or a second code in the search code string (40a) read out at the search code string read-out step;
a next code ID read-out step (S811, S813) executed by the search execution part (116) that reads out (S811) from the next code ID table (310) corresponding to the specified code string block (15) a next code ID pointed to by a code ID included within the code ID range read out at the code ID range read-out step (S706, S707, S816) for the code type of the head code in the search code string (40a) or a next code ID held corresponding to the head code ID in the specified code string block (15) and stored in the index data management table (321), and after that successively reads out from the next code ID table (310) for a specified code string block (15) the next code ID held corresponding to the read-out next code ID, and makes a determination (S813) whether the next code ID coincides with the head code ID in the code string block (15);
a code ID verify step (S817) executed by the search execution part (116) that, when the next code ID read out at the next code ID read-out step does not coincide with the code ID of the head code in the code string block (15), verifies whether the next code ID is included within the code ID range read out at the code ID range read-out step;
a search start position specifying step (S602, S609) executed by the search management part (115) that successively specifies to the search execution part (116) a code string block (15) from the first code string block (15a);
a next code string block specifying step (S901) executed by the search management part (115) that, when it is determined at the next code ID read-out step that the next code ID read out coincides with the code ID of the head code in the code string block (15a), specifies to the search execution part (116) the code string block (15b) located next after the code string block (15a); and wherein
after the search management part (115) executes the search start position specifying step (S602, S609),
the code range read-out step (S706, S707, S816) successively reads out a code ID range of a code type for each code starting from the head code in the search code string (40a), and
the next code ID read-out step {S811, S813) first reads out from next code ID table (310) corresponding to the specified code string block (15) the next code ID held corresponding to a code ID included within the code ID range for the code type of the head code in the search code string (40a), and
after the search management part (115) executes the next code string specifying step (S901),
the code ID range read-out step (S706, S707, S816) successively reads out a code ID range of a code type for each code starting from the next code in the search code string (40a), and
the next code ID read-out step (S811, S813) first reads out from next code ID table (310) corresponding to the specified code string block (15) the next code ID held corresponding to the head code ID which is held in the index data management table entry (321) for the specified code string block (15).

18. A data configuration according to claim 17, wherein
a next code ID table (310) holds, corresponding to each of the code IDs, a code position which shows position of each of the code IDs in the search target code string (10a), and
when the verification whether the next code ID read out at the next code ID read-out step (S8111, SS813) is included within the code ID range read out at the code ID range read-out step (S706, S707, S816) succeeds from a head code of the search code string (10a) to a tail code of the search code string (10a),
the code ID verify step (S817) outputs as a search result code position a code position held in the next code ID table (310) corresponding to the code ID of the head code.

19. A data configuration according to claim 18, wherein
a next code ID and a code position held in the next code ID table (310) corresponding to a code ID are held contiguously in code position sequence for each code ID of codes of the same code type.

20. A computer readable storage medium holding the data configuration according to any one of claim 17 to claim 19.

21. An index data creation apparatus for a code string search searching search target code strings (10a) that are the object of a search by means of a search code string (40a), comprising:
a search target code string read-out means (101) that successively reads out code string blocks (15) that are parts of a search target code string (10a) that is partitioned into a plurality of code string blocks (15), and are designed so that tail codes of the code string blocks (15) are duplicated in the head codes of following code string blocks (15) and obtains a number of occurrence of each code type of codes in the read-out code string block (15);
a code ID range table creation means (102) that creates code ID range tables (309), each of the code ID range tables (309) holding a code ID range for each code of the same type, which is a range of code IDs uniquely identifying each and every code located in each of the code string blocks (15), based on the number of occurrences of each code type obtained by the search target code string read-out means (101);
a next code ID table creation means (103) that creates next code ID tables (310) corresponding to the code string blocks (15), each of the next code ID table (310) holding, corresponding to each of the code IDs, a next code ID, which is a code ID of a code located next after a code whose code ID is said each of the code IDs in a code string block (15), based on the code string blocks (15) read out by the search target code string read-out means (101) and the code ID range table (309); and
an index data creation management means (104) that reserves an index data storage area (324) holding the code ID range table (309) and the next code ID table (310) corresponding to a code string block (15) for each such code string block (15) and creates an index data management table (321) holding, for each code string block (15), a head code ID which is a code ID of a head code of the code string block (15) and a pointer to the index data storage area (324) for each code string block (15).

22. An index data creation apparatus according to claim 21, wherein
a next code ID and a code position held in the next code ID table (310) corresponding to a code ID are held contiguously in code position sequence for each code ID of codes of the same code type.

23. An index data creation method performed by an index data creation apparatus for a code string search searching search target code strings (10a) that are the object of the search by means of a search code string (40a), comprising:
a search target code string read-out step (S420) that successively reads out code string blocks (15) that are parts of a search target code string (10a) that is partitioned into a plurality of code string blocks (15), and are designed so that tail codes of the code string blocks (15) are duplicated in the head codes of following code string blocks (15) and obtains a number of occurrence of each code type of codes in the read-out code string block (15);
a code ID range table creation step (S430) that creates code ID range tables (309), each of the code ID range tables (309) holding a code ID range for each code of the same type, which is a range of code IDs uniquely identifying each and every code located in each of the code string blocks (15), based on the number of occurrences of each code type obtained at the search target code string read-out step (S420);
a next code ID table creation step (430) that creates next code ID tables (310), each of the next code ID table (310) holding, corresponding to each of the code IDs, a next code ID, which is a code ID of a code located next after a code whose code ID is said each of the code IDs in a code string block (15), based on the code string blocks (15) read out at the search target code string read-out step (S420) and the code ID range table (310); and wherein
the search target code string read-out step (S420), the code ID range table creation step (S430), and the next code ID table creation step (S440) are all repeatedly executed on all the code string blocks (15).

24. An index data creation program that makes a computer execute steps of an index data creation method for a code string search searching search target code strings that are the object of the search by means of a search code string, the steps of the index data creation method comprising:
a search target code string read-out step (S420) that successively reads out code string blocks (15) that are parts of a search target code string (10a) that is partitioned into a plurality of code string blocks (15), and are designed so that tail codes of the code string blocks (15) are duplicated in the head codes of following code string blocks (15) and obtains a number of occurrence of each code type of codes in the read-out code string block (15);
a code ID range table creation step (S430) that creates code ID range tables (309), each of the code ID range tables (309) holding a code ID range for each code of the same type, which is a range of code IDs uniquely identifying each and every code located in each of the code string blocks (15), based on the number of occurrences of each code type obtained at the search target code string read-out step (S420);
a next code ID table creation step (430) that creates next code ID tables (310), each of the next code ID table (310) holding, corresponding to each of the code IDs, a next code ID, which is a code ID of a code located next after a code whose code ID is said each of the code IDs in a code string block (15), based on the code string blocks (15) read out at the search target code string read-out step (S420) and the code ID range table (310); and wherein
the search target code string read-out step (S420), the code ID range table creation step (S430), and the next code ID table creation step (S440) are all repeatedly executed on all the code string blocks (15).

25. A computer readable storage medium holding the index data creation program according to claim 24.
